# EUROPEAN PATENT SPECIFICATION

(11) **EP 3 062 270 B1**
(45) Date of publication and mention of the grant of the patent: **15.09.2021**
(21) Application number: 16157635.0
(22) Date of filing: 26.02.2016
(51) Int. Cl.: G06Q 20/00, G06Q 20/04, G06Q 20/32, G06Q 20/40, G07F 7/08, H04L 29/08, G07F 19/00

(54) **METHOD AND APPARATUS FOR PROVIDING CARD SERVICE USING ELECTRONIC DEVICE**
VERFAHREN UND VORRICHTUNG ZUR BEREITSTELLUNG EINES KARTENSERVICE MIT EINER ELEKTRONISCHEN VORRICHTUNG
PROCÉDÉ ET APPAREIL POUR FOURNIR UN SERVICE DE CARTE UTILISANT UN DISPOSITIF ÉLECTRONIQUE

(30) Priority: 27.02.2015 US 201562126121 P; 29.06.2015 KR 20150092412
(43) Date of publication of application: 31.08.2016
(73) Proprietor: Samsung Electronics Co., Ltd., Gyeonggi-do 16677 (KR)
(72) Inventor: SOHN, Se Chang, Gyeonggi-do (KR); KWON, Won-Kyu, Seoul (KR); KIM, Geon-Soo, Gyeonggi-do (KR); LEE, Kyeonghun, Seoul (KR); LEE, Chang-Ho, Gyeonggi-do (KR); LEE, Cheroo, Seoul (KR)
(74) Representative: HGF

(56) References cited:
- US-A1- 2012 231 844
- US-A1- 2013 325 712
- None

## Description

### TECHNICAL FIELD

The present disclosure relates to an electronic device (e.g., smart phone) and a system and corresponding operation metho ds.

### BACKGROUND

Recently, there is a tendency of increase in provision of a card service us ing an electronic device and users of the service. A card service using an electronic de vice is a service of issuing a card to an electronic device through communication betw een the electronic device and a server (e.g., trusted service management (TSM) server or card issuer or issuing bank server) and then allowing the electronic device to use th e card after authenticating (e.g., identifying and verifying (ID&V)) the card. For exam ple, an electronic device may communicate with a server, receive, from the server, a c ard (e.g., electronic card or electronic token) issued by the server through user authenti cation and electronic device authentication, and then store the card in a security area o f the electronic device. The electronic device may perform an authentication process f or use of the issued card by communicating with the server, and may perform a card s ervice (e.g., settlement or payment) using the card stored in the security area when the authentication has been completed.

In the case of current card services using an electronic device, a card is i ssued to only a corresponding electronic device having requested the issuance of the c ard. For example, the current card services do not support issuing of a card to another electronic device (e.g., a device (such as a wearable device) that does not perform com munication with a server), which is connected with the corresponding electronic devic e in a companion mode.

Therefore, a user who mainly uses the another electronic device may have an inconvenience in that the user should indispensably carry the corresponding electronic device in order to use the card service, because the card is not issued to the another electronic device. For example, a user may need to use a card (e.g., an account card), which is associated with the card issued to the corresponding electronic device, in another electronic device (e.g., a wearable device) possessed by the user. However, in the current card services, a server is unable to identify, guarantee, or authenticate another electronic device connected to a corresponding electronic device and thus does not support issuing of a card to another electronic device.

The above information is presented as background information only to assist with an understanding of the present disclosure. No determination has been made, and no assertion is made, as to whether any of the above might be applicable as prior art with regard to the present disclosure.

US-2012/231844-A1 discloses a smart card device that is configured to facilitate wireless network access and credential verification. Specifically, the device is configured to meet the physical and electrical specification for commercially available mobile devices utilizing a standard Subscriber Identity Module (SIM) for network access. The device combines the features of the SIM with Common Access Card or Personal Identity Verification card features to allow a network subscriber to invoke secure payment transactions over a carrier's network. The system includes data storage for maintaining a plurality of network and transaction instrument profiles and a profile gateway for receiving transaction information from a payment gateway, sending an authorization request to a user's mobile device, receiving a transaction authorization from the mobile device, and sending transaction information to a payment gateway to finalize the payment transaction.

US-2013/325712-A1 discloses a card payment system including an affiliated merchant terminal configured to transmit payment-related information including an affiliated merchant ID and a payment amount and a relay device configured to store the payment-related information transmitted from the affiliated merchant terminal in a memory, and provide the payment-related information stored in the memory to a mobile communication terminal of a customer, for a card payment using the mobile communication terminal of the customer. Accordingly, a customer can safely and quickly perform a credit transaction by using a mobile communication terminal of the customer even without presenting a payment card to an affiliated merchant, and moreover perform the credit transaction at a desired place in the affiliated merchant even without unnecessarily moving to a counter or exposing financial information of the customer.

### SUMMARY

Aspects of the present disclosure are to address at least the above-mentioned problems and/or disadvantages and to provide at least the advantages described below. The invention is defined as an electronic device according to claim 1, a device according to claim 5, and operation methods according to claims 8 and 11, with various embodiments as defined in the dependent claims.

An operation method of an electronic device according to various embodiments of the present disclosure may include detecting a start of operations for issuing and authenticating a card for a sub-electronic device connected through a secure session, acquiring information of the sub-electronic device, transferring the acquired information to a server guaranteeing the sub-electronic device to the server to request issuance and authentication of the card for the sub-electronic device, and receiving a result of processing of the issuance and authentication of the card from the server and transferring the result to the sub-electronic device.

In accordance with another aspect of the present disclosure, a non-transitory computer readable recording medium in which programs for executing the method in a processor are recorded is provided.

A recording medium according to various embodiments of the present disclosure may include a non-transitory computer-readable recording medium including a program for executing the operations of interconnecting an electronic device and a second external electronic device through a secure session, providing a first external electronic device with account information associated with the second external electronic device by the electronic device, receiving authentication information for an authentication process performed by the first external electronic device based on the account information, and providing the authentication information to the second external electronic device to process a card service relating to the second external electronic device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to various embodiments of the present disclosure;
FIG. 2 is a block diagram of an electronic device according to various embodiments of the present disclosure;
FIG. 3 is a block diagram of program modules according to various embodiments of the present disclosure;
FIG. 4 is a diagram schematically illustrating a configuration of an electronic device according to various embodiments of the present disclosure;
FIG. 5 illustrates a system environment for issuing and authenticating a card according to various embodiments of the present disclosure;
FIGS. 6 and 7 are diagrams for describing an operation of issuing a card in the environment of FIG. 5 in various embodiments of the present disclosure;
FIGS. 8 and 9 are diagrams for describing operations for authenticating a card in the environment of FIG. 5 in various embodiments of the present disclosure;
FIG. 10 illustrates a system environment for issuing and authenticating a card according to various embodiments of the present disclosure;
FIG. 11 is a diagram for describing operations for issuing a card in the environment of FIG. 10 in various embodiments of the present disclosure;
FIG. 12 is a diagram for describing operations for authenticating a card in the environment of FIG. 10 in various embodiments of the present disclosure;
FIG. 13 is a diagram for describing operations for issuing a card in a system according to various embodiments of the present disclosure;
FIG. 14 is a diagram for describing operations for authenticating a card in a system according to various embodiments of the present disclosure;
FIGS. 15 and 16 are flow diagrams illustrating processes in which an electronic device according to various embodiments of the present disclosure performs, by proxy, operations for issuance and authentication of a card for a sub-electronic device;
FIGS. 17 and 18 are flowcharts illustrating processes in which a sub-electronic device according to various embodiments of the present disclosure performs, in association with an electronic device, operations for issuance and authentication of a card according to various embodiments of the present disclosure; and
FIG. 19 is a flowchart illustrating a process in which a sub-electronic device according to various embodiments of the present disclosure updates an issued card.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of' according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g., embedded processor) only for performing the corresponding operations or a generic-purpose processor (e.g., central processing unit (CPU) or application processor (AP)) that can perform the corresponding operations by executing one or more software programs stored in a memory device.

The terms used in the present disclosure are only used to describe specific embodiments, and are not intended to limit the present disclosure. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude embodiments of the present disclosure.

An electronic device according to various embodiments of the present disclosure may include at least one of, for example, a smart phone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a Moving Picture Experts Group phase 1 or phase 2 (MPEG-1 or MPEG-2) audio layer 3 (MP3) player, a mobile medical device, a camera, and a wearable device. According to various embodiments, the wearable device may include at least one of an accessory type (e.g., a watch, a ring, a bracelet, an anklet, a necklace, a glasses, a contact lens, or a head-mounted device (HMD)), a fabric or clothing integrated type (e.g., an electronic clothing), a body-mounted type (e.g., a skin pad, or tattoo), and a bio-implantable type (e.g., an implantable circuit).

According to various embodiments of the present disclosure, the electronic device may be a home appliance. The home appliance may include at least one of, for example, a television, a digital versatile disc (DVD) player, an audio, a refrigerator, an air conditioner, a vacuum cleaner, an oven, a microwave oven, a washing machine, an air cleaner, a set-top box, a home automation control panel, a security control panel, a television (TV) box (e.g., Samsung HomeSync™, Apple TV™, or Google TV™), a game console (e.g., Xbox™ and PlayStation™), an electronic dictionary, an electronic key, a camcorder, and an electronic photo frame.

According to another embodiment of the present disclosure, the electronic device may include at least one of various medical devices (e.g., various portable medical measuring devices (a blood glucose monitoring device, a heart rate monitoring device, a blood pressure measuring device, a body temperature measuring device, etc.), a magnetic resonance angiography (MRA), a magnetic resonance imaging (MRI), a computed tomography (CT) machine, and an ultrasonic machine), a navigation device, a global positioning system (GPS) receiver, an event data recorder (EDR) , a flight data recorder (FDR) , a vehicle infotainment devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to various embodiments of the present disclosure, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments will be described with reference to the accompanying drawings. As used herein, the term "user" may indicate a person who uses an electronic device or a device (e.g., an artificial intelligence electronic device) that uses an electronic device.

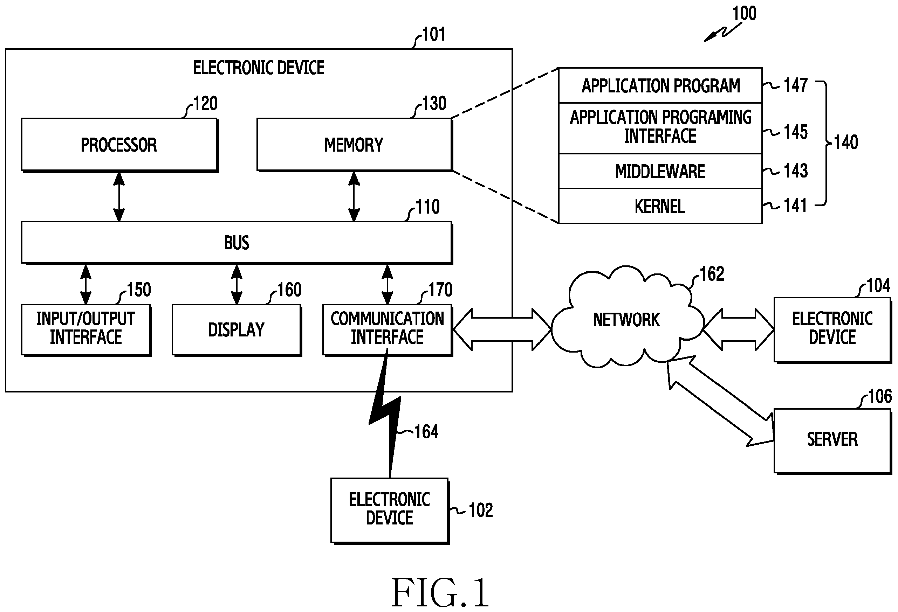

FIG. 1 illustrates a network environment including an electronic device according to various embodiments of the present disclosure.

An electronic device 101 within a network environment 100, according to various embodiments, will be described with reference to FIG. 1. The electronic device 101 may include a bus 110, a processor 120, a memory 130, an input/output interface 150, a display 160, and a communication interface 170. According to an embodiment of the present disclosure, the electronic device 101 may omit at least one of the above components or may further include other components.

The bus 110 may include, for example, a circuit which interconnects the components 110 to 170 and delivers a communication (e.g., a control message and/or data) between the components 110 to 170.

The processor 120 may include one or more of a central processing unit (CPU), an application processor (AP), and a communication processor (CP). The processor 120 may carry out, for example, calculation or data processing relating to control and/or communication of at least one other component of the electronic device 101.

The memory 130 may include a volatile memory and/or a non-volatile memory. The memory 130 may store, for example, commands or data relevant to at least one other component of the electronic device 101. According to an embodiment of the present disclosure, the memory 130 may store software and/or a program 140. The program 140 may include, for example, a kernel 141, middleware 143, an application programming interface (API) 145, and/or application programs (or "applications") 147. At least some of the kernel 141, the middleware 143, and the API 145 may be referred to as an operating system (OS).

The kernel 141 may control or manage system resources (e.g., the bus 110, the processor 120, or the memory 130) used for performing an operation or function implemented in the other programs (e.g., the middleware 143, the API 145, or the application programs 147). Furthermore, the kernel 141 may provide an interface through which the middleware 143, the API 145, or the application programs 147 may access the individual components of the electronic device 101 to control or manage the system resources.

The middleware 143, for example, may serve as an intermediary for allowing the API 145 or the application programs 147 to communicate with the kernel 141 to exchange data.

Also, the middleware 143 may process one or more task requests received from the application programs 147 according to priorities thereof. For example, the middleware 143 may assign priorities for using the system resources (e.g., the bus 110, the processor 120, the memory 130, or the like) of the electronic device 101, to at least one of the application programs 147. For example, the middleware 143 may perform scheduling or loading balancing on the one or more task requests by processing the one or more task requests according to the priorities assigned thereto.

The API 145 is an interface through which the applications 147 control functions provided from the kernel 141 or the middleware 143, and may include, for example, at least one interface or function (e.g., instruction) for file control, window control, image processing, character control, and the like.

The input/output interface 150, for example, may function as an interface that may transfer commands or data input from a user or another external device to the other element(s) of the electronic device 101. Furthermore, the input/output interface 150 may output the commands or data received from the other element(s) of the electronic device 101 to the user or another external device.

Examples of the display 160 may include a liquid crystal display (LCD), a light-emitting diode (LED) display, an organic light-emitting diode (OLED) display, a MicroElectroMechanical Systems (MEMS) display, and an electronic paper display. The display 160 may display, for example, various types of contents (e.g., text, images, videos, icons, or symbols) to users. The display 160 may include a touch screen, and may receive, for example, a touch, gesture, proximity, or hovering input using an electronic pen or a user's body part.

The communication interface 170 may establish communication, for example, between the electronic device 101 and an external device (e.g., a first external electronic device 102, a second external electronic device 104, or a server 106). For example, the communication interface 170 may be connected to a network 162 through wireless or wired communication, and may communicate with an external device (e.g., the first external electronic device 102, the second external electronic device 104 or the server 106).The wireless communication may use at least one of, for example, long term evolution (LTE), LTE-advance (LTE-A), code division multiple access (CDMA), wideband CDMA (WCDMA), universal mobile telecommunications system (UMTS), wireless broadband (WiBro), and global system for mobile communications (GSM), as a cellular communication protocol. In addition, the wireless communication may include, for example, short range communication 164. The short-range communication 164 may include at least one of, for example, Wi-Fi, Bluetooth, near field communication (NFC), and global navigation satellite system (GNSS). GNSS may include, for example, at least one of global positioning system (GPS), global navigation satellite system (Glonass), Beidou Navigation satellite system (Beidou) or Galileo, and the European global satellite-based navigation system, based on a location, a bandwidth, or the like. Hereinafter, in the present disclosure, the "GPS" may be interchangeably used with the "GNSS". The wired communication may include, for example, at least one of a universal serial bus (USB), a high definition multimedia interface (HDMI), recommended standard 232 (RS-232), and a plain old telephone service (POTS). The network 162 may include at least one of a telecommunication network such as a computer network (e.g., a LAN or a WAN), the Internet, and a telephone network.

Each of the first and second external electronic devices 102 and 104 may be of a type identical to or different from that of the electronic device 101. According to an embodiment of the present disclosure, the server 106 may include a group of one or more servers.

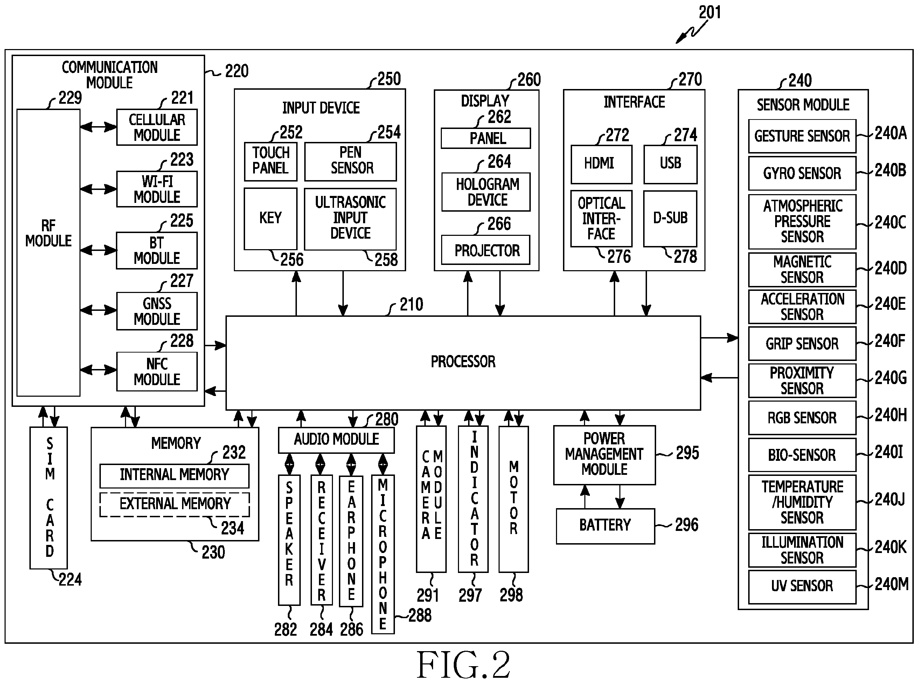

FIG. 2 is a block diagram of an electronic device according to various embodiments of the present disclosure.

The electronic device 201 may include, for example, all or a part of the electronic device 101 shown in FIG. 1. The electronic device 201 may include one or more processors 210 (e.g., application processors (AP)), a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298.

The processor 210 may control a plurality of hardware or software components connected to the processor 210 by driving an operating system or an application program, and perform processing of various pieces of data and calculations. The processor 210 may be embodied as, for example, a system on chip (SoC). According to an embodiment of the present disclosure, the processor 210 may further include a graphic processing unit (GPU) and/or an image signal processor. The processor 210 may include at least some (for example, a cellular module 221) of the components illustrated in FIG. 2. The processor 210 may load, into a volatile memory, commands or data received from at least one (e.g., a non-volatile memory) of the other components and may process the loaded commands or data, and may store various data in a non-volatile memory.

The communication module 220 may have a configuration equal or similar to that of the communication interface 170 of FIG. 1. The communication module 220 may include, for example, a cellular module 221, a Wi-Fi module 223, a BT module 225, a GNSS module 227 (e.g., a GPS module 227, a Glonass module, a Beidou module, or a Galileo module), an NFC module 228, and a radio frequency (RF) module 229.

The cellular module 221, for example, may provide a voice call, a video call, a text message service, or an Internet service through a communication network. According to an embodiment of the present disclosure, the cellular module 221 may distinguish and authenticate the electronic device 201 in a communication network using the subscriber identification module 224 (for example, the SIM card). According to an embodiment of the present disclosure, the cellular module 221 may perform at least some of the functions that the AP 210 may provide. According to an embodiment of the present disclosure, the cellular module 221 may include a communication processor (CP).

For example, each of the Wi-Fi module 223, the BT module 225, the GNSS module 227, and the NFC module 228 may include a processor for processing data transmitted/received through a corresponding module. According to an embodiment of the present disclosure, at least some (e.g., two or more) of the cellular module 221, the Wi-Fi module 223, the BT module 225, the GNSS module 227, and the NFC module 228 may be included in one integrated chip (IC) or IC package.

The RF module 229, for example, may transmit/receive a communication signal (e.g., an RF signal). The RF module 229 may include, for example, a transceiver, a power amplifier module (PAM), a frequency filter, a low noise amplifier (LNA), and an antenna. According to another embodiment of the present disclosure, at least one of the cellular module 221, the WIFI module 223, the BT module 225, the GNSS module 227, and the NFC module 228 may transmit/receive an RF signal through a separate RF module.

The subscriber identification module 224 may include, for example, a card including a subscriber identity module and/or an embedded SIM, and may contain unique identification information (e.g., an integrated circuit card identifier (ICCID)) or subscriber information (e.g., an international mobile subscriber identity (IMSI)).

The memory 230 (e.g., the memory 130) may include, for example, an embedded memory 232 or an external memory 234. The embedded memory 232 may include at least one of a volatile memory (e.g., a dynamic random access memory (DRAM), a static RAM (SRAM), a synchronous dynamic RAM (SDRAM), and the like) and a non-volatile memory (e.g., a one time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), a hard disc drive, a solid state drive (SSD), and the like).

The external memory 234 may further include a flash drive, for example, a compact flash (CF), a secure digital (SD), a micro secure digital (Micro-SD), a mini secure digital (Mini-SD), an eXtreme Digital (xD), a MultiMediaCard (MMC), a memory stick, or the like. The external memory 234 may be functionally and/or physically connected to the electronic device 201 through various interfaces.

The sensor module 240, for example, may measure a physical quantity or detect an operation state of the electronic device 201, and may convert the measured or detected information into an electrical signal. The sensor module 240 may include, for example, at least one of a gesture sensor 240A, a gyro sensor 240B, an atmospheric pressure sensor (barometer) 240C, a magnetic sensor 240D, an acceleration sensor 240E, a grip sensor 240F, a proximity sensor 240G, a color sensor 240H (e.g., red, green, and blue (RGB) sensor), a biometric sensor (medical sensor) 240I, a temperature/humidity sensor 240J, an illuminance sensor 240K, and a ultra violet (UV) sensor 240M. Additionally or alternatively, the sensor module 240 may include, for example, an E-nose sensor, an electromyography (EMG) sensor, an electroencephalogram (EEG) sensor, an electrocardiogram (ECG) sensor, an infrared (IR) sensor, an iris scan sensor, and/or a finger scan sensor. The sensor module 240 may further include a control circuit for controlling one or more sensors included therein. According to an embodiment of the present disclosure, the electronic device 201 may further include a processor configured to control the sensor module 240, as a part of the processor 210 or separately from the processor 210, and may control the sensor module 240 while the processor 210 is in a sleep state.

The input device 250 may include, for example, a touch panel 252, a (digital) pen sensor 254, a key 256, or an ultrasonic input device 258. The touch panel 252 may use, for example, at least one of a capacitive type, a resistive type, an infrared type, and an ultrasonic type. The touch panel 252 may further include a control circuit. The touch panel 252 may further include a tactile layer, and provide a tactile reaction to the user.

The (digital) pen sensor 254 may include, for example, a recognition sheet which is a part of the touch panel or is separated from the touch panel. The key 256 may include, for example, a physical button, an optical key or a keypad. The ultrasonic input device 258 may detect, through a microphone (e.g., the microphone 288), ultrasonic waves generated by an input tool, and identify data corresponding to the detected ultrasonic waves.

The display 260 (e.g., the display 160) may include a panel 262, a hologram device 264, or a projector 266. The panel 262 may include a configuration identical or similar to the display 160 illustrated in FIG. 1. The panel 262 may be implemented to be, for example, flexible, transparent, or wearable. The panel 262 may be embodied as a single module with the touch panel 252. The hologram device 264 may show a three dimensional (3D) image in the air by using an interference of light. The projector 266 may project light onto a screen to display an image. The screen may be located, for example, in the interior of or on the exterior of the electronic device 201. According to an embodiment of the present disclosure, the display 260 may further include a control circuit for controlling the panel 262, the hologram device 264, or the projector 266.

The interface 270 may include, for example, a HDMI 272, a USB 274, an optical interface 276, or a D-subminiature (D-sub) 278. The interface 270 may be included in, for example, the communication interface 170 illustrated in FIG. 1. Additionally or alternatively, the interface 270 may include, for example, a mobile high-definition link (MHL) interface, a SD card/ MMC interface, or an infrared data association (IrDA) standard interface.

The audio module 280, for example, may bilaterally convert a sound and an electrical signal. At least some components of the audio module 280 may be included in, for example, the input/output interface 150 illustrated in FIG. 1. The audio module 280 may process voice information input or output through, for example, a speaker 282, a receiver 284, earphones 286, or the microphone 288.

The camera module 291 is, for example, a device which may photograph a still image and a video. According to an embodiment of the present disclosure, the camera module 291 may include one or more image sensors (e.g., a front sensor or a back sensor), a lens, an image signal processor (ISP) or a flash (e.g., LED or xenon lamp).

The power management module 295 may manage, for example, power of the electronic device 201. According to an embodiment of the present disclosure, the power management module 295 may include a power management integrated circuit (PMIC), a charger integrated circuit (IC), or a battery or fuel gauge. The PMIC may use a wired and/or wireless charging method. Examples of the wireless charging method may include, for example, a magnetic resonance method, a magnetic induction method, an electromagnetic wave method, and the like. Additional circuits (e.g., a coil loop, a resonance circuit, a rectifier, etc.) for wireless charging may be further included. The battery gauge may measure, for example, a residual quantity of the battery 296, and a voltage, a current, or a temperature while charging. The battery 296 may include, for example, a rechargeable battery and/or a solar battery.

The indicator 297 may display a particular state (e.g., a booting state, a message state, a charging state, or the like) of the electronic device 201 or a part (e.g., the processor 210) of the electronic device 201. The motor 298 may convert an electrical signal into a mechanical vibration, and may generate a vibration, a haptic effect, or the like. Although not illustrated, the electronic device 201 may include a processing device (e.g., a GPU) for supporting a mobile TV. The processing device for supporting a mobile TV may process, for example, media data according to a certain standard such as digital multimedia broadcasting (DMB), digital video broadcasting (DVB), or mediaFLO™.

Each of the above-described component elements of hardware according to the present disclosure may be configured with one or more components, and the names of the corresponding component elements may vary based on the type of electronic device. In various embodiments, the electronic device may include at least one of the above-described elements. Some of the above-described elements may be omitted from the electronic device, or the electronic device may further include additional elements. Also, some of the hardware components according to various embodiments may be combined into one entity, which may perform functions identical to those of the relevant components before the combination.

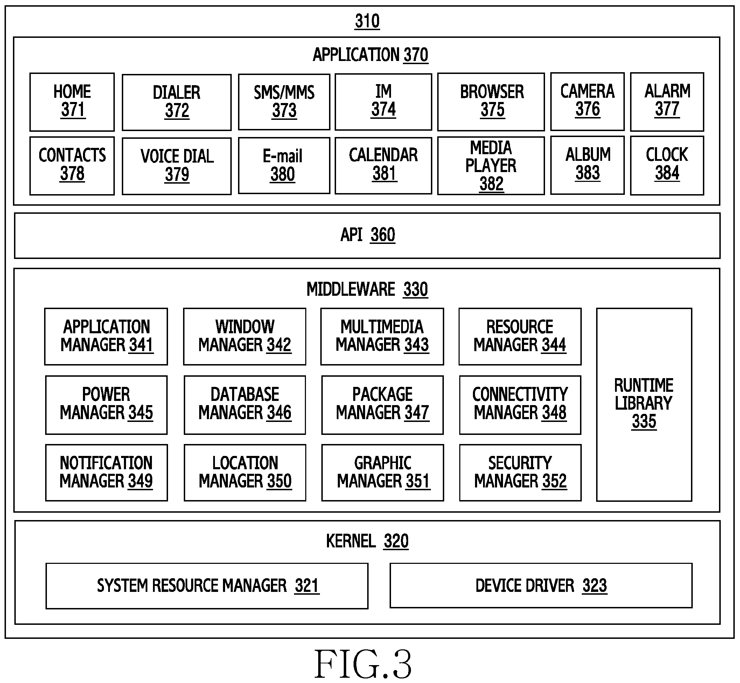

FIG. 3 is a block diagram of a program module according to various embodiments of the present disclosure.

According to an embodiment of the present disclosure, the program module 310 (e.g., the program 140) may include an OS for controlling resources related to the electronic device (e.g., the electronic device 101) and/or various applications (e.g., the application programs 147) executed in the operating system. The operating system may be, for example, Android, iOS, Windows, Symbian, Tizen, Bada, or the like.

The program module 310 may include a kernel 320, middleware 330, an API 360, and/or applications 370. At least some of the program module 310 may be preloaded on an electronic device, or may be downloaded from an external electronic device (e.g., the electronic device 102 or 104, or the server 106).

The kernel 320 (e.g., the kernel 141) may include, for example, a system resource manager 321 and/or a device driver 323. The system resource manager 321 may control, allocate, or collect system resources. According to an embodiment of the present disclosure, the system resource manager 321 may include a process management unit, a memory management unit, a file system management unit, and the like. The device driver 323 may include, for example, a display driver, a camera driver, a Bluetooth driver, a shared memory driver, a USB driver, a keypad driver, a Wi-Fi driver, an audio driver, or an inter-process communication (IPC) driver.

For example, the middleware 330 may provide a function required in common by the applications 370, or may provide various functions to the applications 370 through the API 360 so as to enable the applications 370 to efficiently use the limited system resources in the electronic device. According to an embodiment of the present disclosure, the middleware 330 (e.g., the middleware 143) may include at least one of a run time library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses in order to add a new function through a programming language while an application 370 is being executed. The runtime library 335 may perform input/output management, memory management, the functionality for an arithmetic function, or the like.

The application manager 341 may manage, for example, a life cycle of at least one of the applications 370. The window manager 342 may manage graphical user interface (GUI) resources used by a screen. The multimedia manager 343 may recognize a format required for reproduction of various media files, and may perform encoding or decoding of a media file by using a codec suitable for the corresponding format. The resource manager 344 may manage resources of a source code, a memory, and a storage space of at least one of the applications 370.

The power manager 345 may operate together with, for example, a basic input/output System (BIOS) or the like to manage a battery or power source and may provide power information or the like required for the operations of the electronic device. The database manager 346 may generate, search for, and/or change a database to be used by at least one of the applications 370. The package manager 347 may manage installation or an update of an application distributed in a form of a package file.

For example, the connectivity manager 348 may manage wireless connectivity such as Wi-Fi or Bluetooth. The notification manager 349 may display or notify of an event such as an arrival message, promise, proximity notification, and the like in such a way that does not disturb a user. The location manager 350 may manage location information of an electronic device. The graphic manager 351 may manage a graphic effect which will be provided to a user, or a user interface related to the graphic effect. The security manager 352 may provide all security functions required for system security, user authentication, or the like. According to an embodiment of the present disclosure, when the electronic device (e.g., the electronic device 101) has a telephone call function, the middleware 330 may further include a telephony manager for managing a voice call function or a video call function of the electronic device.

The middleware 330 may include a middleware module that forms a combination of various functions of the above-described components. The middleware 330 may provide a module specialized for each type of OS in order to provide a differentiated function. Further, the middleware 330 may dynamically remove some of the existing components or add new components.

The API 360 (e.g., the API 145) is, for example, a set of API programming functions, and may be provided with a different configuration according to an OS. For example, in the case of Android or iOS, one API set may be provided for each platform. In the case of Tizen, two or more API sets may be provided for each platform.

The applications 370 (e.g., the application programs 147) may include, for example, one or more applications which may provide functions such as a home 371, a dialer 372, an short message service (SMS)/ multimedia messaging service (MMS) 373, an Instant Message (IM) 374, a browser 375, a camera 376, an alarm 377, contacts 378, a voice dial 379, an email 380, a calendar 381, a media player 382, an album 383, a clock 384, health care (e.g., measuring exercise quantity or blood sugar) (not shown), or environment information (e.g., providing atmospheric pressure, humidity, or temperature information) (not shown).

According to an embodiment of the present disclosure, the applications 370 may include an application (hereinafter, referred to as an "information exchange application" for convenience of description) that supports exchanging information between the electronic device (e.g., the electronic device 101) and an external electronic device (e.g., the electronic device 102 or 104). The information exchange application may include, for example, a notification relay application for transferring specific information to an external electronic device or a device management application for managing an external electronic device.

For example, the notification relay application may include a function of transferring, to the external electronic device (e.g., the electronic device 102 or 104), notification information generated from other applications of the electronic device 101 (e.g., an SMS/MMS application, an e-mail application, a health management application, or an environmental information application). Further, the notification relay application may receive notification information from, for example, an external electronic device and provide the received notification information to a user.

The device management application may manage (e.g., install, delete, or update), for example, at least one function of an external electronic device (e.g., the electronic device 102 or 104) communicating with the electronic device (e.g., a function of turning on/off the external electronic device itself (or some components) or a function of adjusting the brightness (or a resolution) of the display), applications operating in the external electronic device, and services provided by the external electronic device (e.g., a call service or a message service).

According to an embodiment of the present disclosure, the applications 370 may include applications (e.g., a health care application of a mobile medical appliance or the like) designated according to an external electronic device (e.g., attributes of the electronic device 102 or 104). According to an embodiment of the present disclosure, the applications 370 may include an application received from an external electronic device (e.g., the server 106, or the electronic device 102 or 104).

According to an embodiment of the present disclosure, the applications 370 may include a preloaded application or a third party application that may be downloaded from a server. The names of the components of the program module 310 of the illustrated embodiment of the present disclosure may change according to the type of operating system.

According to various embodiments, at least a part of the program module 310 may be implemented in software, firmware, hardware, or a combination of two or more thereof. At least some of the program module 310 may be implemented (e.g., executed) by, for example, the processor (e.g., the processor 210). At least some of the program module 310 may include, for example, a module, a program, a routine, a set of instructions, and/or a process for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an application-specific integrated circuit (ASIC) chip, a field-programmable gate arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a non-transitory computer-readable storage medium in a programming module form. The instruction, when executed by a processor (e.g., the processor 120), may cause the one or more processors to execute the function corresponding to the instruction. The non-transitory computer-readable recoding media may be, for example, the memory 130.

The non-transitory computer readable recoding medium may include a hard disk, a floppy disk, magnetic media (e.g., a magnetic tape), optical media (e.g., a compact disc read only memory (CD-ROM) and a digital versatile disc (DVD)), magneto-optical media (e.g., a floptical disk), a hardware device (e.g., a read only memory (ROM), a random access memory (RAM), a flash memory), and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

Any of the modules or programming modules according to various embodiments of the present disclosure may include at least one of the above described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added. Various embodiments disclosed herein are provided merely to easily describe technical details of the present disclosure and to help the understanding of the present disclosure, and are not intended to limit the scope of the present disclosure.

Proposed various embodiments of the present disclosure relate to a method and an apparatus for providing an electronic device-based card service to support issuance and authentication of a card for a sub-electronic device operating in a companion mode with an electronic device capable of using a communication service.

In various embodiments of the present disclosure, the electronic device may refer to a device, which includes a communication module (e.g., a mobile communication module) for a communication service and has a card that can be issued and authenticated by a server for card issuance and authentication (e.g., a TSM server, card issuer server, or card issuing bank server). In various embodiments of the present disclosure, an electronic device may include all devices which use one or more processors from among various processors including an AP, a CP, a graphic processor (GPU), and a CPU, such as, all information communication devices, multimedia devices, and application devices thereof, which can use a communication service and can perform authentication by themselves. Various embodiments of the present disclosure will be described based on an example in which the electronic device is a smart phone, without being limited thereto.

In various embodiments of the present disclosure, the sub-electronic device may refer to a device, which is connected to the electronic device and can operate together with the electronic device in a companion mode, and is unable to use, by only the sub-electronic device itself, issuance and authentication of a card by a server. In various embodiments of the present disclosure, the sub-electronic device may include a device, which does not support a communication service and cannot be authenticated, by itself, by a server. Various embodiments of the present disclosure will be described based on a representative example in which the sub-electronic device is a wearable device, without being limited thereto.

Hereinafter, a method, an apparatus, and a system for supporting a card service by a sub-electronic device by associating the sub-electronic device with an electronic device according to various embodiments of the present disclosure will be described with reference to the accompanying drawings. However, various embodiments of the present disclosure may not be limited to the descriptions provided below and thus, it should be construed that the present disclosure may be applied to various embodiments based on the embodiment provided below. Hereinafter, various embodiments of the present disclosure will be described from the perspective of hardware. However, various embodiments of the present disclosure include a technology that uses both hardware and software and thus, the various embodiments of the present disclosure may not exclude the perspective of software.

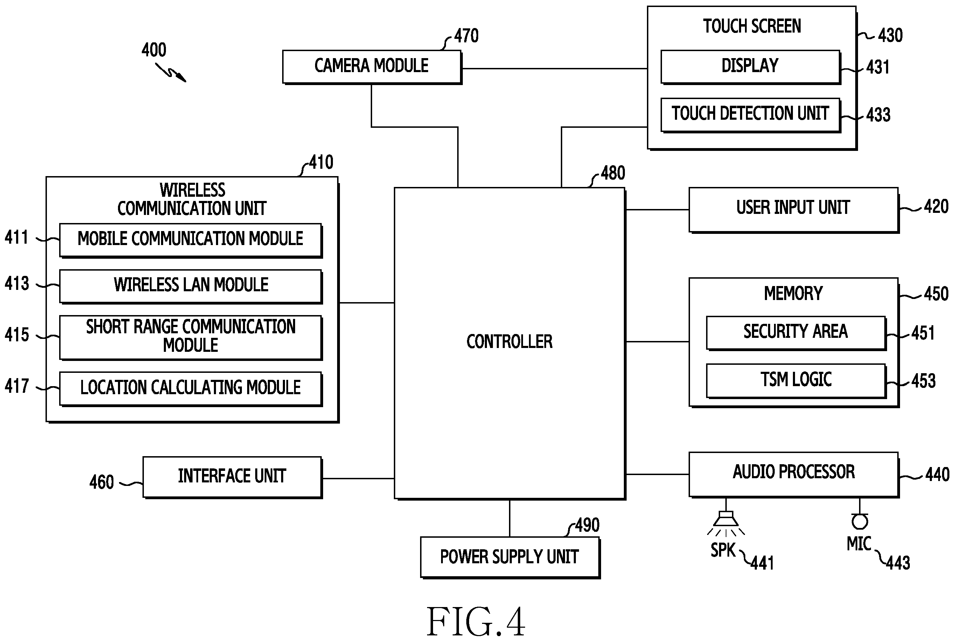

FIG. 4 is a diagram schematically illustrating a configuration of an electronic device according to an embodiment of the present disclosure.

Referring to FIG. 4, an electronic device 400 (e.g., an electronic device or a sub-electronic device) according to various embodiments of the present disclosure may include a wireless communication unit 410, a user input unit 420, a touch screen 430, an audio processor 440, a memory 450, an interface unit 460, a camera module 470, a controller 480, and a power supply unit 490. According to various embodiments of the present disclosure, the electronic device 400 may include fewer or more elements than the elements illustrated in FIG. 4, since the elements of FIG. 4 are not essential. For example, in various embodiments of the present disclosure, when an electronic device 400 operates as a sub-electronic device, some elements (e.g., a mobile communication module 411, a location calculating module 417, etc.) may be excluded from the wireless communication unit 410 of FIG. 4.

The wireless communication unit 410 may include a configuration identical or similar to the communication module 220 of FIG. 2. The wireless communication unit 410 may include one or more modules which enable wireless communication between the electronic device 400 and another electronic device (e.g., a sub-electronic device or a server). For example, the wireless communication unit 410 may include a mobile communication module 411, a wireless local area network (WLAN) module 413, a short range communication module 415, and a location calculating module 417.

The wireless communication unit 411 may have a configuration identical or similar to that of the cellular module 221 of FIG. 2. The mobile communication module 411 may execute transmission and reception of a wireless signal with at least one of a base station, an external electronic device (e.g., the electronic device 104), and various servers (e.g., a TSM server, an issuer server, an integration server, a provider server, a content server, an Internet server, a cloud server, and the like), over a mobile communication network. The wireless signal may include a voice signal, a data signal, or various types of control signals. The mobile communication module 411 may transmit various pieces of data required for the operations of the electronic device 400 to the external device (e.g., the server 106, another electronic device 104, or the like), in response to a user's request.

The wireless LAN module 413 may have a configuration identical or similar to the Wi-Fi module 223 of FIG. 2. The wireless LAN module 413 may indicate a module for establishing a wireless Internet access and a wireless LAN link with another external electronic device (e.g., the electronic device 102 or the server 106). The WLAN module 413 may be installed inside or outside the electronic device 400. Wireless Internet technology may include Wi-Fi, wireless broadband (Wibro), world interoperability for microwave access (WiMax), high speed downlink packet access (HSDPA), millimeter Wave (mmWave), or the like. The wireless LAN module 413 may inter-work with another electronic device connected with the electronic device 400 through a network (e.g., a wireless Internet network) to transmit or receive various data of the electronic device 400 to or from the outside. The WLAN module 413 may always remain in a turned-on state or may be turned on according to a setting of the electronic device 400 or a user input.

The short range communication module 415 may be a module for performing short-range communication. The short-range communication technology may include Bluetooth, Bluetooth low energy (BLE), a radio frequency IDentification (RFID), infrared data association (IrDA), ultra wideband (UWB), ZigBee, near field communication (NFC), and the like. The short-range communication module 415 may inter-work with another external electronic device (e.g., a sub-electronic device or server) connected with the electronic device 400 over a network (e.g., a short-range communication network) to transmit or receive various data of the electronic device 400 to or from the other external electronic device. The short range communication module 415 may always remain in a turned-on state or may be turned on according to a setting of the electronic device 400 or a user input.

The location calculating module 417 may include a configuration identical or similar to the GNSS module 227 of FIG. 2. The location calculating module 417 may be a module for obtaining the location of the electronic device 400, and may include a GPS module as a representative example. The location calculating module 417 may measure the location of the electronic device 400 through a triangulation principle.

The user input unit 420 may generate input data for controlling the operation of the electronic device 400 in response to a user input. The user input unit 420 may include at least one input means for detecting various inputs of the user. For example, the user input unit 420 may include a key pad, a dome switch, a physical button, a touch pad (resistive/capacitive type), jog &shuttle switch, a sensor (e.g., the sensor module 240), or the like.

A part of the user input unit 420 may be embodied outside the electronic device 400 in a form of a button, or a part or the whole of the user input unit 420 may be embodied as a touch panel. The user input unit 420 may receive a user input for initiating the operations of the electronic device 400 according to various embodiments of the present disclosure, or may generate an input signal based on a user input.

The touch screen 430 may indicate an input/output means that can simultaneously execute an input function and a display function, and may include a display 431 (e.g., the display 160 or 260), and a touch sensing unit 433. The touch screen 430 may provide an input/output interface between the electronic device 400 and the user, may transfer a touch input of the user to the electronic device 400, and may serve as a medium that shows an output from the electronic device 400 to the user. The touch screen 430 may show a visual output to the user. The visual output may be expressed in the form of text, graphic, video, or a combination thereof.

According to various embodiments of the present disclosure, the display 431 may display (output) various information processed in the electronic device 400. For example, the display 431 may display a UI or a GUI, related to the operation of performing a process for issuing and authenticating a card by the electronic device 400. The display 431 may use various displays (e.g., the display 160).

The touch sensing unit 433 may be securely located on the display 431 and may detect a user input which contacts or approaches the surface of the touch screen 430. The user input may include a touch event or a proximity event that is input based on at least one of a single-touch, a multi-touch, hovering, and an air gesture. The touch sensing unit 433 may receive a user input for initiating the operations relating to the use of the electronic device 400 according to various embodiments of the present disclosure, and may generate an input signal based on a user input.

The audio processor 440 may include a configuration identical or similar to the audio module 280 of FIG. 2. The audio processor 440 may transmit an audio signal received from the controller 480 to a speaker (SPK) 441, and may transfer, to the controller 480, an audio signal such as a voice or the like, which is input from a microphone 443. The audio processor 440 may convert voice/sound data into audible sound and output the audible sound through the speaker 441 under the control of the controller 480, and may convert an audio signal such as a voice or the like, which is received from the microphone 443, into a digital signal and transfer the digital signal to the controller 480.

The speaker 441 may output audio data that is received from the wireless communication unit 410 or stored in the memory 450. The speaker 441 may output a sound signal associated with various operations (functions) executed by the electronic device 400.

The microphone 443 may receive an external sound signal and process the received sound signal to be electric voice data. Various noise reduction algorithms may be implemented in the microphone 443 to remove noise generated during the process of receiving an external sound signal. The microphone 443 may be used to input an audio stream, such as a voice command (e.g., a voice command for starting an operation for issuing and authenticating a card).

The memory 450 (e.g., the memory 130 and 230) may store one or more programs that are executed by the controller 480, and may execute a function for temporarily storing input/output data. The input/output data may include a file, such as a video, an image, or a photograph.

The memory 450 may store one or more programs and data associated with execution of a function of the electronic device 400 for issue, authentication, and use of a card. In various embodiments, the memory 450 may include a security area 451. In various embodiments, the security area 451 may refer to an area for storing private information, such as information of a card issued by a server, which is directly used for settlement or payment by the card. The security area 451 may be implemented based on, for example, a universal subscriber identity module (USIM), a trust zone, a trusted execution environment (TEE), and a smart card.

The memory 450 may include one or more application modules (or software modules) or the like. The application module may include commands for issuance and authentication of a card through a communication with a server. For example, the application module may include a TSM logic 453 capable of processing an operation (function) of performing issuance and authentication of a card requested to be issued by a user, through a communication with a server that issues the card.

The interface unit 460 may include a configuration identical or similar to the interface 270 of FIG. 2. The interface unit 460 may receive data or power from an external electronic device, and may transfer the same to each element in the electronic device 400. The interface unit 460 may enable the data inside the electronic device 400 to be transmitted to an external electronic device.

The camera module 470 (e.g., the camera module 291) indicates a configuration that supports a photographing function of the electronic device 400. The camera module 470 may photograph a subject under the control of the controller 480, and may transfer the photographed data (e.g., image) to the display 431 and the controller 480. In various embodiments, the camera module 470 may be designed to be located at a particular position in the electronic device 400 (e.g., a middle part or lower end of a body of the electronic device 400), at which the camera module can perform the photographing.

The controller 480 may control a general operation of the electronic device 400. According to various embodiments of the present disclosure, the controller 480 may process establishment of connection (e.g., pairing) by a secure session between an electronic device and a sub-electronic device and control various operations for issuing and authenticating an account card of the electronic device for the sub-electronic device by association between the electronic device and the sub-electronic device connected by a secure session.

In various embodiments of the present disclosure, the controller 480 may process a connection of communication (e.g., Bluetooth communication, Wi-Fi communication, etc.) between the electronic device and the sub-electronic device by the short range communication module 415 or the wireless LAN module 413, and process a connection of communication (e.g., mobile communication) between the electronic device and the sub-electronic device by the mobile communication module 411. The controller 480 may process a connection of communication (e.g., NFC) by the short range communication module 415 at the time of performing settlement or payment by a card.

According to various embodiments of the present disclosure, the electronic device 400 may be connected with a sub-electronic device and operate as a device for processing, by proxy, issuance or authentication of a card for the sub-electronic device. In this event, the controller 480 may be entrusted with powers for card processing (e.g., issuance and/or authentication of a card) for the sub-electronic device and process, by proxy, related operations, in a state of having been paired with the sub-electronic device based on a secure session. The controller 480 may request and acquire, from the sub-electronic device, information required for the card processing. The information may include a device identifier (e.g., TEE ID, eSE ID, device serial number, etc.) of the sub-electronic device and a public key of the sub-electronic device 700. On the basis of the acquired information, the controller 480 may request a server (e.g., a TSM server or an issuer server) to issue or authenticate a card for the sub-electronic device, and may guarantee (or certify) that the sub-electronic device and the electronic device come into existence as a logically single device (e.g., companion mode) at the time of requesting the issuance or authentication of the card and the sub-electronic device is a safe device. According to one embodiment of the present disclosure, the controller 480 may provide signature information for the sub-electronic device. Upon receiving a result of processing for the card processing request from the server, the controller 480 may transfer the result of processing to the sub-electronic device.

According to various embodiments of the present disclosure, the controller 480 may operate as a device which is connected with the electronic device 400 and process issuance or authentication of a card. In this event, the controller 480 may provide a connected electronic device capable of performing communication with information for card processing (e.g., device identifier and public key of the sub-electronic device) in response to a card processing request and entrust or assign the sub-electronic device to perform the card processing, in a state of having been paired with the electronic device based on a secure session. When receiving, from the electronic device, a result of processing in response to a card processing request, the controller 480 may decode the result and store the decode result in the security area 451 or activate it for the issued card.

According to various embodiments of the present disclosure, the controller 480 may inter-work with software modules stored in the memory 450 to issue, authenticate, or activate the card of the electronic device 400 according to various embodiments of the present disclosure. According to various embodiments of the present disclosure, the controller 480 may be embodied as one or more processors that control the operations of the electronic device 400 according to various embodiments of the present disclosure by executing one or more programs stored in the memory 450. According to various embodiments of the present disclosure, the controller 480 may be configured to process operations relating to issuance and authentication of a card for the sub-electronic device by executing one or more commands included in the memory 450 by one or more processors. The control operation of the controller 480 according to various embodiments of the present disclosure will be described in detail with reference to the drawings described below.

The power supply unit 490 may receive external power and internal power and may supply the power required for an operation of each element under the control of the controller 480. In various embodiments of the present disclosure, the power supply unit 490 may turn on or off the supply of power to the display 431, the camera module 470, the sensor module 475, and a motor (e.g., the motor 298) driving a propeller, under the control of the controller 480.

Various embodiments described in the present disclosure may be implemented in a non-transitory computer (or similar device)-readable recording medium using software, hardware or a combination thereof. In various embodiments of the present disclosure, the recording medium may include a non-transitory computer-readable recording medium including a program for executing the operations of: interconnecting an electronic device and a sub-electronic device through a secure session; guaranteeing the sub-electronic device by the electronic device; issuing a card for and authenticating the sub-electronic device, based on information of the sub-electronic device and account information of the electronic device.

In various embodiments of the present disclosure, the recording medium may include a non-transitory computer-readable recording medium including a program for executing the operations of: interconnecting an electronic device (e.g., electronic device 600) and a second external electronic device (e.g.; sub-electronic device 700) through a secure session; providing a first external electronic device (e.g., server 500) with account information associated with the second external electronic device by the electronic device; receiving authentication information for an authentication process performed by the first external electronic device based on the account information; and providing the authentication information to the second external electronic device to process a card service relating to the second external electronic device.

In general, scenarios for use of a card may be classified into three types including issuance (registration), authentication, and use.

In various embodiments, the issuance (registration) may refer to an operation of converting an actual card (e.g., a plastic type card) into a form usable in the electronic device 400 and storing the converted card. For example, the issuance (registration) may indicate a process of storing, in a secure area of the electronic device 400, an actual card number, such as a financial-primary account number (F-PAN) based on a PAN, a virtual card number issued by an issuer server called device account number (DAN), or payable data in a form like a token.

In an issuance (registration) process according to various embodiments of the present disclosure, when a sub-electronic device preparing card issuance (registration) is unable to perform communication by itself (e.g., a device which has a modem for a network communication but is temporarily unable to perform communication, for example in a companion mode, or a device which does not have a modem for a network communication and can perform only a short range wireless communication such as an NFC or Bluetooth), the sub-electronic device can request or receive data through a connected or authentication-connected electronic device. According to an embodiment, an agent directly communicating with a server may be different from an agent requesting issuance (registration) of a card. Hereinafter, an issuance operation according to various embodiments of the present disclosure will be described in detail with reference to the accompanying drawings.

In various embodiments, the authentication refers to a process of activating an issued (registered) card, which is also called an IDentification & verification (ID&V) process. The authentication refers to a process of identifying whether a user having requested issuance of a card is an actual user of the card (i.e., personal identification) and may include a process of performing an authentication in order to activate payable data stored in a storage area (e.g., secure area) to shift into a payable state. The authentication may be performed by transferring, in a form of a one-time password (OTP), a method (e.g., E-mail authentication, SMS authentication, telephone authentication, or application-to-application authentication) determined by a user.

In an authentication process according to various embodiments of the present disclosure, when a sub-electronic device trying to get authentication of a card therefor is unable to perform communication by itself alone, the sub-electronic device may perform the authentication process through communication with an electronic device with which the sub-electronic device can connect. For example, the electronic device may transfer a method of OTP to a sub-electronic device by inputting a forwarded value. Then, the server may transmit issued card information after encrypting the card information by a public key of the sub-electronic device so that the electronic device to which the sub-electronic device is connected cannot read the card information. Hereinafter, an authentication operation according to various embodiments of the present disclosure will be described in detail with reference to the accompanying drawings.

In various embodiments, the use includes an operation of payment through an actual POS device using a card having been authenticated after being issued (registered), and may further include an authentication process for determining whether the payment is to be valid, before the actual payment operation. For example, based on a token stored in host card emulation (H.CE), an authentication key (e.g., cryptogram) may be generated through limited user keys (LUKs) or single user keys (SUKs), which are dynamic data generated in the authentication process in order to determine the validity of an issued card, to determine the validity with the server (e.g., a TSM server) before the actual payment is performed. Further, after the payment, a process of notifying the user of the success in the payment may be included.

Hereinafter, a scenario for issuing a card to a sub-electronic device and authenticating the issued card on the basis of two connectable devices (e.g., an electronic device and a sub- electronic device (e.g., wearable device)) according to various embodiments of the present disclosure will be described.

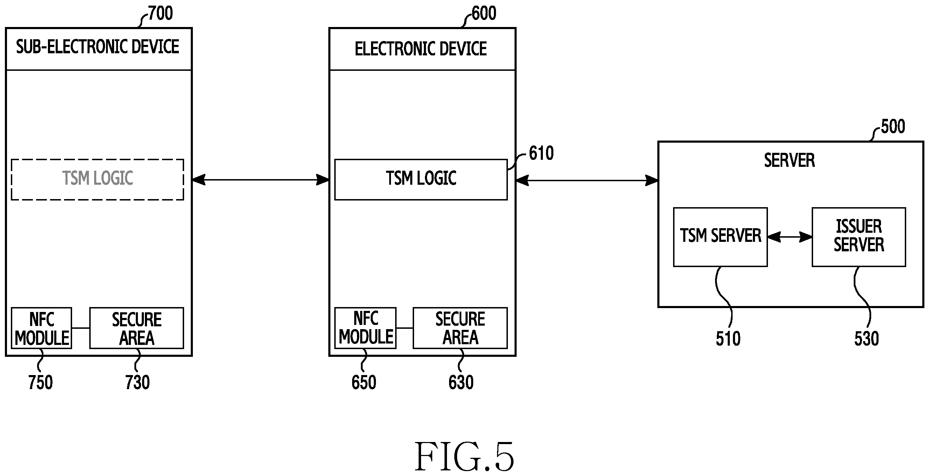

FIG. 5 illustrates a system environment for issuing and authenticating a card according to various embodiments of the present disclosure.

Referring to FIG. 5, a system according to various embodiments of the present disclosure may include a server 500, an electronic device 600 (e.g., smart phone), and a sub-electronic device 700 (e.g., wearable device). FIG. 5 is a figure for describing an operation in the case where the sub-electronic device 700 does not include a TSM logic (e.g., TSM logic 453 of FIG. 4) for issuance and authentication of a card and performs only the function of storing private information directly used for card settlement or payment, such as card information issued by the server 500. For example, when a card is issued (registered) to and authenticated for a sub-electronic device 700 connected to an electronic device 600 capable of performing communication, the sub-electronic device 700 may use the electronic device 600 as a host to enable the issuance and authentication of the card by association between the sub-electronic device 700 and the electronic device 600.

In various embodiments, the server 500 may refer to a device for processing operations relating to the issuance and authentication of a card. In various embodiments, the server 500 may include a TSM server 510 and an issuer server 530.

The TSM server 510 may be entrusted with a card issue authority by the card issuer server 530 and with an authority of access to a secure area (e.g., secure area 630 or secure area 730) of the electronic device 400 (e.g., electronic device 600 or sub-electronic device 700) by an electronic device vendor (e.g., electronic device manufacturing company or communication business provider), perform operations of card issue/removal and life cycle management in the secure area of the electronic device 400, and provide a card settlement or payment service.

The issuer server 530 may include, for example, a bank server or a card company server, possess account information of a user (e.g., card holder), and perform operations relating to issuance of a card to the user.

In various embodiments of the present disclosure, the electronic device 600 provides a communication service with the server 500 and may include a device which can be guaranteed and authenticated by the server 500. In various embodiments, the electronic device 600 may operate as a device for guaranteeing, to the server 500, the sub-electronic device 700 connected through a secure session. According to one embodiment, the electronic device 600 may perform a guarantee role required for issuance and authentication of a card for the sub-electronic device 700. The electronic device 600 may include a TSM logic 610, a secure area 630, and an NFC module 650. In various embodiments, the electronic device 600 may perform a function as a proxy.

The TSM logic 610 may indicate a client within the electronic device 600 inter-working with the TSM server 510. The TSM logic 610 may provide a safe (secure) path which enables the TSM server 510 to access the secure area 630 in the electronic device 600.

The secure area 630 may indicate a safe space for storing secret information directly used for settlement or payment, such as card information. In various embodiments, the security area 630 may be implemented based on a universal subscriber identity module (USIM), a trust zone, a TEE, and a smart card.

The NFC module 650 may provide communication for settlement or payment by through contactless connection between a POS device and the secure area 630 through contactless data connection.

In various embodiments, the sub-electronic device 700 may indicate a device which is connected to the electronic device 600 and operates in a companion mode with the electronic device 600. In various embodiments of the present disclosure, the sub-electronic device 700 may indicate a device preparing issuance (registration) and authentication of a card or may not include at least a part of a module required for the issuance (registration) and authentication of the card. Otherwise, the sub-electronic device 700 may undergo a situation in which all modules required for issuance and authentication of a card do not operate. In this event, the sub-electronic device 700 may use a module (e.g., a communication module) of the electronic device 600 connected thereto through a secure session, to perform, as a proxy, a communication with the server 500. According to one embodiment, a device (e.g., the sub-electronic device 700) which requests issuance (registration) of a card and a device (e.g., the electronic device 600) which actually performs communication with the server 500 may be different from each other. Further, card information issued by the server 500 may be stored in a different device.

In various embodiments of the present disclosure, the secure area 730 and the NFC module 750 of the sub-electronic device 700 may include configurations corresponding to the secure area 630 and the NFC module 650 of the electronic device 600, and a detailed description thereof is omitted here.

Referring to FIG. 5, the sub-electronic device 700 may get a card issued for the sub-electronic device 700 and perform authentication of the issued card, using the TSM logic 610 of the electronic device 600 connected thereto.

According to one embodiment of the present disclosure, when the sub-electronic device 700 lacks a TSM logic enabling a direct interaction with the server 500 (e.g., TSM server 510) and does not have a modem enabling a direct communication with the server 500 through a network, or in a situation where it is unable to perform the direct communication, the sub-electronic device 700 may perform a data communication with the server 500 through the TSM logic 610 of the electronic device 600 connected for a network communication, for issuance and authentication of a card.

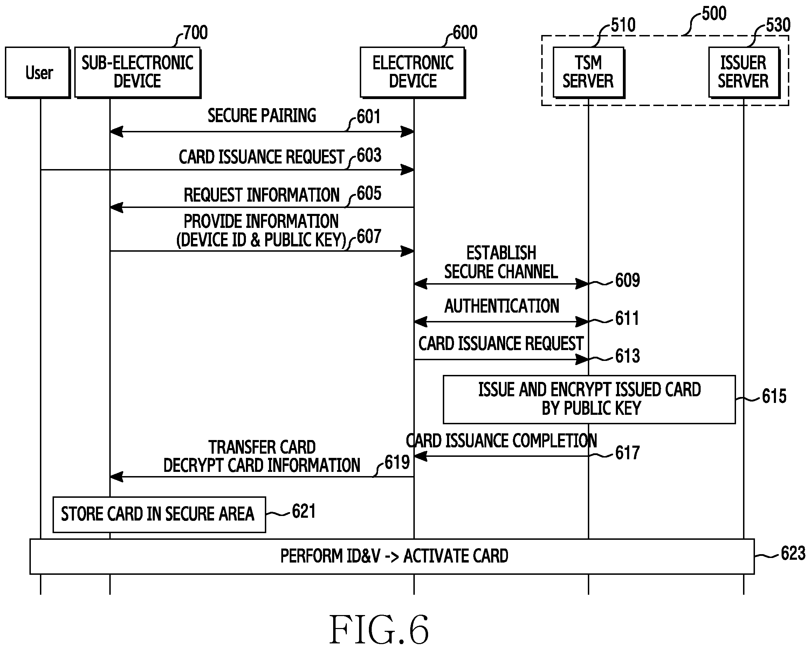

FIG. 6 is a figure for describing an operation of issuing a card in the environment of FIG. 5 in various embodiments of the present disclosure.

Referring to FIG. 6, in operation 601, the electronic device 600 (e.g., smart phone) and the sub-electronic device 700 (e.g., wearable device) may perform pairing (e.g., secure pairing) on the basis of a secure session. According to one embodiment of the present disclosure, the secure session may refer to a connection temporarily configured when encrypted data is exchanged between the electronic device 600 and the sub-electronic device 700, and may be automatically terminated when the connection is terminated. In the secure session, a secret key (private key) may be first generated and transferred. For example, in a method of generating and transferring a secret key, the sub-electronic device 700 may generate its own secret key, encrypt the generated secret key by using the public key of the electronic device 600, and transfer the encrypted secret key to the electronic device 600. The electronic device 600 may receive the encrypted key from the sub-electronic device 700 and decrypt the received encrypted key into the secret key of the sub-electronic device 700 by using the secret key of the electronic device 600. In various embodiments of the present disclosure, the electronic device 600 and the sub-electronic device 700 are established as a logically single device (e.g., companion mode), and communication between the devices may guarantee encrypted security.

In operation 603, a user may request the electronic device 600 to issue a card for the sub-electronic device 700. According to one embodiment of the present disclosure, a user may select a card to be issued for (to be used by) the sub-electronic device 700 on the basis of a user interface provided by the electronic device 600, and then initiate the card issuing operation. Otherwise, according to another embodiment of the present disclosure, a user may select a card to be issued on the basis of a user interface provided by the sub-electronic device 700, and then initiate the card issuing operation. In response to a user input initiating the card issuing operation, the sub-electronic device 700 may transmit, to the connected electronic device 600, a request signal for requesting issuance of a card according to a user input. In various embodiments of the present disclosure, various information required for issuance of a card for the sub-electronic device 700 may be input through the electronic device 600 or directly input to the sub-electronic device 700 by the user.

In operation 605, in response to the request according to the initiation of the card issuing operation, the electronic device 600 may transmit, to the connected sub-electronic device 700, an information request signal for requesting information of the sub-electronic device 700 required for issuance of a card.

In operation 607, in response to the information request signal from the electronic device 600, the sub-electronic device 700 may transmit, to the electronic device 600, identification information of the sub-electronic device 700 required for issuance of a card. For example, the sub-electronic device 700 may provide a device identifier (e.g., TEE ID, eSE ID, device serial number, etc.) of the sub-electronic device 700 and a public key of the sub-electronic device 700 to the electronic device 600.

In operation 609, if the electronic device 600 acquires identification information of the sub-electronic device 700, for which issuance of a card has been requested, the electronic device 600 may generate a secure session (e.g., secure channel) between the electronic device 600 and the server 500 (e.g., TSM server 510).

In operation 611, the electronic device 600 and the server 500 may perform authentication (or device authentication) on the basis of a secure session.

In operation 613, when the authentication with the server 500 is completed, the electronic device 600 request the server 500 to issue a card. According to one embodiment of the present disclosure, the electronic device 600 request issuance of a card associated with an account of a user for the sub-electronic device 700. In various embodiments of the present disclosure, when requesting issuance of a card for the sub-electronic device 700, the electronic device 600 may transmit, to the server 500 (e.g., TSM server 510), a device identifier of the sub-electronic device 700 and a public key of the sub-electronic device 700 acquired from the sub-electronic device 700 as well as a device identifier of the electronic device 600 and user information. In various embodiments of the present disclosure, the electronic device 600 may attest (or guarantee) that the sub-electronic device 700 and the electronic device 600 are logically safely (securely) connected to each other and the request is a card issuance request for the sub-electronic device 700.

In operation 615, in response to the card issuance request for the sub-electronic device 700 associated with the electronic device 600, the server 500 (e.g., TSM server 510) may generate (issue or register) a card for the sub-electronic device 700 and encrypt the generated card by a public key of the sub-electronic device 700. In various embodiments of the present disclosure, the server 500 may manage information that the electronic device 600 and the sub-electronic device 700 have been logically safely connected in the authentication process with the electronic device 600 and a card for the sub-electronic device 700 has been issued.

In operation 617, the server 500 may notify the electronic device 600 of the completion of the issuance of the card for the sub-electronic device 700. In various embodiments of the present disclosure, when the completion of the issuance of the card has been notified of, the server 500 may transfer card information in which the card issued for the sub-electronic device 700 has been encrypted.

In operation 619, upon receiving the notification of the card issuance completion for the sub-electronic device 700 from the server 500, the electronic device 600 may transfer the received encrypted card information to the sub-electronic device 700.

In operation 621, when receiving the encrypted card information of the issued card from the electronic device 600, the sub-electronic device 700 may decrypt the card information by using the secret key of the sub-electronic device 700 and then store (install) the decrypted card information in the secure area 730.

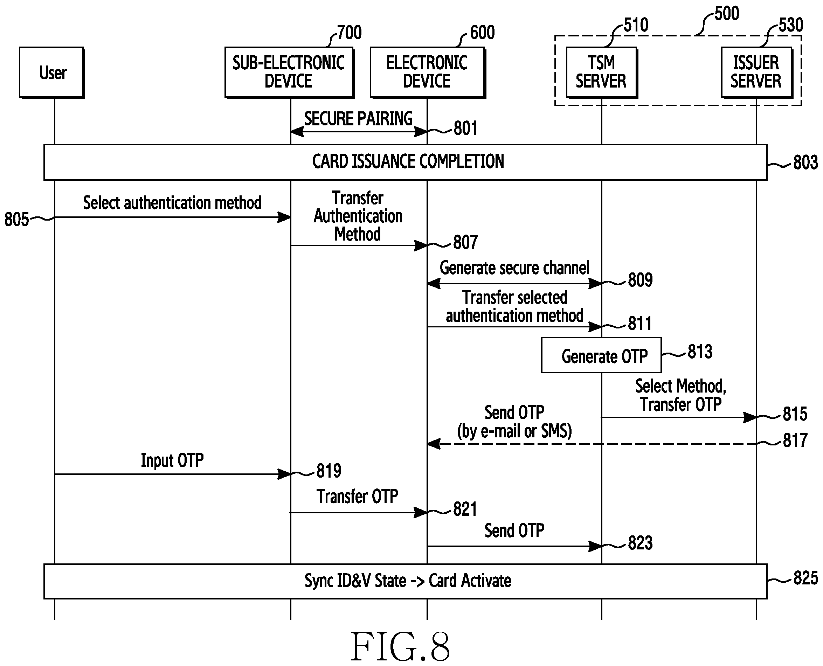

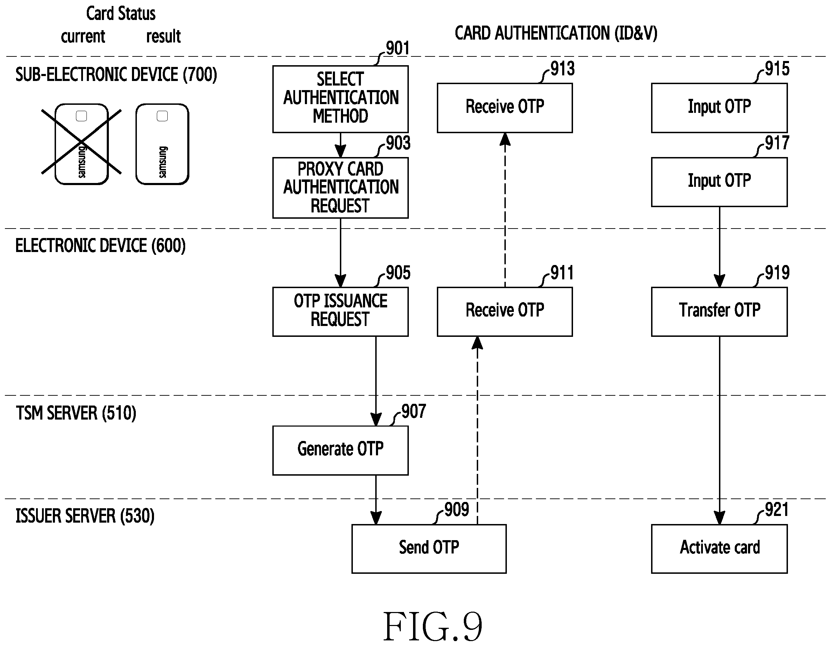

In operation 623, the sub-electronic device 700 may authenticate (e.g., ID&V) the issued card through the server 500 and then activate the card. An operation for authenticating an issued card according to various embodiments of the present disclosure will be described with reference to FIGS. 8 and 9.

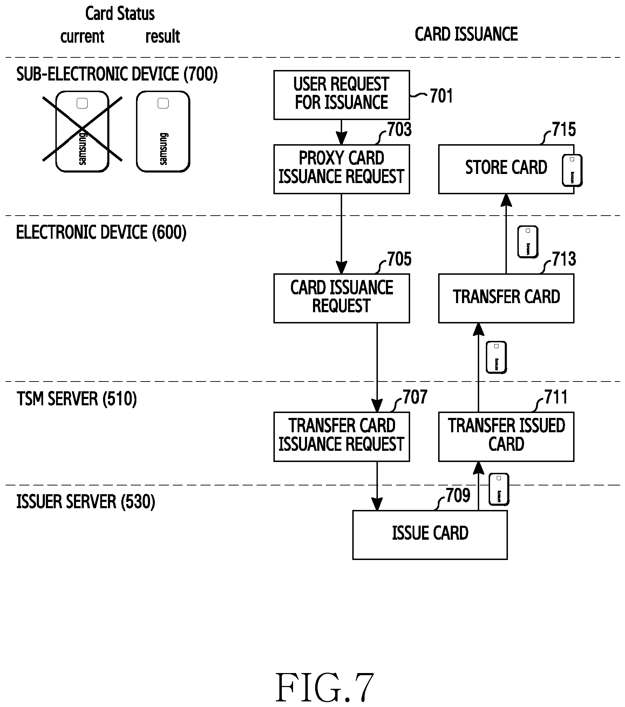

According to various embodiments of the present disclosure as described above, when the sub-electronic device 700 does not include a TSM logic, a card may be issued through a processing by proxy by the electronic device 600 to which the sub-electronic device 700 is connected. FIG. 7 illustrates a card issuance scenario according to various embodiments of the present disclosure.

FIG. 7 is a figure for describing an operation of issuing a card in the environment of FIG. 5 in various embodiments of the present disclosure.

FIG. 7 illustrates a signal flow for issuance (registration) of a card by the sub-electronic device 700, which has a deactivated network communication function or is unable to use the network communication function, as described above in the examples illustrated in FIGS. 5 and 6. For example, the sub-electronic device 700 may include a wearable device and may be a device connected, as an accessory, to the electronic device 600 capable of performing a network communication. It may be assumed that the sub-electronic device 700 is already in a state wherein it has been safely (securely) connected to the electronic device 600 in FIG. 7.

A user may start an operation (e.g., a card issuance request) of issuing a card for the sub-electronic device 700, using the sub-electronic device 700 or the electronic device 600 at operation 701.

In response to the initiation of the card issuance operation, the sub-electronic device 700 may entrust the electronic device 600 to interwork with the server 500 in relation to the issuance of the card for the sub-electronic device 700 at operation 703. According to one embodiment of the present disclosure, the sub-electronic device 700 is unable to perform communication by itself alone and can request a proxy issuance (registration) of the card for the sub-electronic device 700, through the connected the electronic device 600.

In response to the proxy processing request in relation to the issuance of the card for the sub-electronic device 700, the electronic device 600 may communicate with the server 500 (e.g., TSM server 510) to request issuance of the card for the sub-electronic device 700 at operation 705. According to one embodiment of the present disclosure, the electronic device 600 may perform communication with the TSM server 510 to request issuance of the card for the sub-electronic device 700, and may receive, as a response to the request, encrypted card information of the card issued for the sub-electronic device 700, from the TSM server 510. In various embodiments of the present disclosure, the electronic device 600 may transfer a device identifier (e.g., TEE ID, eSE ID, device serial number, etc.) of the sub-electronic device 700 and a public key of the sub-electronic device 700 to the server 500.

When receiving the card issuance request for the sub-electronic device 700 from the electronic device 600, the TSM server 510 may transfer the received card issuance request to the issuer server 530 at operation 707.

In response to the card issuance request, the issuer server 530 may issue the card for the sub-electronic device 700, and transfer the card issued for the sub-electronic device 700 (e.g., encrypted card information or token data) to the TSM server 510 at operation 709. In various embodiments of the present disclosure, the issuer server 530 may encrypt the card issued for the sub-electronic device 700 by the public key of the sub-electronic device 700.

The TSM server 510 may transfer the issued card (e.g., encrypted card information or token data), which has been transferred from the issuer server 530, to the electronic device 600 at operation 711.

When receiving the issued card for the sub-electronic device 700 from the TSM server 510, the electronic device 600 may transfer the received card to the sub-electronic device 700 at operation 713.

The sub-electronic device 700 may receive the issued card from the electronic device 600 and store the card in the secure area 730. According to one embodiment of the present disclosure, the sub-electronic device 700 may decrypt the encrypted card information or token data by its own secret key and then store the decrypted information in a storage area (e.g., secure area 730).

According to various embodiments of the present disclosure, the electronic device 600 may preliminarily obtain issuance of a card to be used by a sub-electronic device 700 which can be connected to itself, and store and manage the card. According to one embodiment of the present disclosure, the issuance of a card may be performed in a state where there is no device (e.g., sub-electronic device 700) which has been currently paired with the electronic device 600. According to various embodiments of the present disclosure, at the time of performing a card issuance operation, the electronic device 600 may obtain an additional card issued for the sub-electronic device 700 as well as a card issued to be used by itself. Thereafter, when the sub-electronic device 700 is paired through a secure session, the electronic device 600 may transfer the preliminarily issued additional card to the paired sub-electronic device 700 to enable the sub-electronic device 700 to use the card without an additional operation (e.g., card issuance operation).

According to various embodiments of the present disclosure, as described above, when the issuance of the card is completed through the electronic device 600 to which the sub-electronic device 700 is connected, authentication (ID&V) may be performed to enable use of the issued card. For example, in order to activate the issued card, authentication of the issued card through an ID&V process by the server 500 (e.g., issuer server 530) is necessary. In various embodiments of the present disclosure, the sub-electronic device 700 may perform the ID&V operation by the server 500 (e.g., issuer server 530), using the electronic device 600 paired therewith through a secure session. Hereinafter, a card authentication process according to various embodiments of the present disclosure will be described with reference to FIG. 8.

FIG. 8 is a figure for describing an operation of authenticating a card in the environment of FIG. 5 in various embodiments of the present disclosure.

FIG. 8 illustrates a signal flow in which the sub-electronic device 700 performs an ID&V process by proxy, using the electronic device 600 to which the sub-electronic device 700 is connected.

In operation 801, the electronic device 600 (e.g, smart phone) and the sub-electronic device 700 (e.g., wearable device) are connected to each other through pairing on an encrypted (secure) session. Then, in operation 803, a card is issued according to a process as described above with reference to FIG. 6.

In operation 805, a user may select an authentication method for performing the ID&V for a card issued for the sub-electronic device 700. According to one embodiment of the present disclosure, a user may select one method among various authentication methods (e.g., e-mail authentication, SMS authentication, telephone authentication, and application-to-application authentication) for the ID&V on a user interface provided by the sub-electronic device 700. For example, a user may request initiation of a card authentication operation for the issued card using the sub-electronic device 700.

In operation 807, in response to the request according to the initiation of the card authentication operation, the sub-electronic device 700 may transfer an authentication method selected by the user to the electronic device 600.

In operation 809, in response to the request according to the initiation of the card authentication operation, the electronic device 600 may generate a secure session (e.g., secure channel) between the electronic device 600 and the server 500 (e.g., TSM server 510).

In operation 811, the electronic device 600 may transfer an authentication method selected for the card authentication on the basis of the secure session to the server 500 (e.g., TSM server 510) to request authentication of the card issued for the sub-electronic device 700.

In operation 813, the server 500 (e.g., TSM server 510) may generate an OTP for authentication (e.g., ID&V) of the card issued to the sub-electronic device 700. Then, in operation 815, the server 500 may transfer the generated OTP to the issuer server 530 (e.g., a card issuing bank server or a card company server) corresponding to the card, the ID&V of which has been requested.

In operation 817, the server 500 (e.g., issuer server 530) may transmit the OTP to the electronic device 600 according to a method corresponding to the authentication method (e.g., ID&V method) selected by the sub-electronic device 700, using registered customer information (e.g., phone number and e-mail).

In operation 819, the user may input, to the sub-electronic device 700, the OTP received from the server 500 through the electronic device 600, and request identification thereof. According to one embodiment of the present disclosure, the electronic device 600 may receive an OTP corresponding to a selected authentication method from the server 500 and may output the received OTP according to the selected authentication method. For example, the electronic device may display OTP information when the selected authentication method is an e-mail authentication or SMS authentication, and may output an alarm for a call received from the server 500 when the selected authentication method is a telephone authentication. The user may identify the OTP received according to the selected authentication method and may input the identified OTP through the sub-electronic device 700.

In operation 821, when there is an input of the OTP and a request for identification thereof from the user, the sub-electronic device 700 may transfer the OTP input to the electronic device 600.

In operation 823, in response to the request for identification of the input OTP from the sub-electronic device 700, the electronic device 600 may transfer the input OTP to the server 500 (e.g., TSM server 510) to request ID&V identification.

In operation 825, when the ID&V process is normally completed through the server 500, for example, when a synchronization state for the OTP is established between the sub-electronic device 700 and the server 500, the issued card may be activated.

According to various embodiments as described above, when the sub-electronic device 700 does not include a TSM logic, a card may be issued through a processing by proxy by the electronic device 600 to which the sub-electronic device 700 is connected. FIG. 9 illustrates a card authentication scenario according to various embodiments of the present disclosure.

According to various embodiments of the present disclosure, the sub-electronic device 700 may check the valid term or number of times of use of an already issued card or token and determine whether the valid term has expired or whether expiration of the valid term is imminent (e.g., the card can be used one time or there is one hour before the expiration of the valid term). Further, the sub-electronic device 700 may predict the consumption pattern of a user. According to the various embodiments of the present disclosure, the sub-electronic device 700 may request the electronic device 600 to update the already issued card or token, on the basis of the determination (prediction) described above. In response to the request from the sub-electronic device 700, the electronic device 600 may transfer existing card information of the sub-electronic device 700 to the server 500 to update the card information. Further, according to the various embodiments of the present disclosure, in order to enable the user to be aware of a time point requiring update, the sub-electronic device 700 may notify the user of the time point through various notification methods (e.g., vibration, bell sound, display, and LEDs) through the electronic device 600. Otherwise, the card information may be updated (background processing) without user's awareness.

FIG. 9 is a figure for describing an operation of authenticating a card in the environment of FIG. 5 in various embodiments of the present disclosure.

FIG. 9 illustrates a signal flow for activating, through an authentication (ID&V) operation, a card issued (registered) by the sub-electronic device 700, which has a deactivated network communication function or is unable to use the network communication function, as described above in the examples illustrated in FIGS. 5 and 8, so as to enable the card to be instantly used for payment.

The sub-electronic device 700 may select an authentication method (ID&V method) on the basis of a user input at operation 901. A user may start a card authentication operation (ID&V) for a card issued to the sub-electronic device 700, using the sub-electronic device 700 or the electronic device 600. In various embodiments of the present disclosure, various methods including methods of SMS, e-mail, call, and app-to-app may be used as the authentication method, and a method selected by the user may be transferred to the TSM server 510 through the electronic device 600 and transferred again from the TSM server 510 to the issuer server 530.

In response to the initiation of the card authentication operation, the sub-electronic device 700 may entrust the electronic device 600 to perform, by proxy, operations for interworking with the server 500 in relation to the authentication of the card issued to the sub-electronic device 700 at operation 903. According to one embodiment of the present disclosure, the sub-electronic device 700 is unable to perform communication by itself alone and can request the connected the electronic device 600 to perform, by proxy, operations for authentication of the card issued to the sub-electronic device 700.

In response to the proxy processing request in relation to the authentication of the card for the sub-electronic device 700, the electronic device 600 may communicate with the server 500 (e.g., TSM server 510) to request issuance of an OTP corresponding to an authentication method selected by the sub-electronic device 700 at operation 905. According to one embodiment of the present disclosure, the electronic device 600 may perform communication with the TSM server 510 to request issuance of an OTP for authentication of the card for the sub-electronic device 700, and may receive, as a response thereto, the OTP for the sub-electronic device 700, transferred from the TSM server 510. In various embodiments of the present disclosure, at the time of requesting issuance of the OTP, the electronic device 600 may transfer not only the authentication method (ID&V method) but also a device identifier (e.g., H.CE unique ID, token ID, or a public key) of the sub-electronic device 700.

Upon receiving the card authentication request for the card issued to the sub-electronic device 700 from the electronic device 600, the TSM server 510 may generate an OTP corresponding to the authentication method and transfer the generated OTP to the issuer server 530 at operation 907.

The issuer server 530 may transfer the OTP, transferred from the TSM server 510, to the electronic device 600 according to a method (e.g., SMS, e-mail, or call) corresponding to the authentication method at operation 909.

The electronic device 600 may receive the OTP from the issuer server 530 on the basis of a requested authentication method and transfer the received OTP to the sub-electronic device 700 at operation 911. The electronic device 600 may directly output the received OTP in accordance with the corresponding authentication method or may directly transfer the received OTP to the sub-electronic device 700 without outputting.

Upon receiving the OTP from the electronic device 600, the sub-electronic device 700 may output the OTP in accordance with the corresponding authentication method at operation 913. Thereafter, the sub-electronic device 700 may receive an input of the OTP by a user at operation 915 or transfer the input OTP to the electronic device 600 to request the electronic device 600 to transfer the OTP to the issuer server 530 at operation 917.

In response to the OTP transfer request from the sub-electronic device 700, the electronic device 600 may transfer the received OTP to the issuer server 530 at operation 919. In various embodiments of the present disclosure, when the OTP is transferred, the sub-electronic device 700 may receive the OTP through the electronic device 600 by proxy since the sub-electronic device 700 is unable to perform communication by itself. Further, the sub-electronic device 700 may transfer the received OTP through a security method established between the electronic device 600 and the sub-electronic device 700. Further, the sub-electronic device 700 may transfer the OTP to the electronic device 600 to make the OTP be transferred to the issuer server 530, and the issuer server 530 may transfer, to the sub-electronic device 700, a key for use of the issued card (including e.g., data related to the number of times of use and valid term for use) to allow the card to be used for a predetermined duration or a predetermined number of times.

The issuer server 530 may identify (process) the OTP received from the electronic device 600, and activate the card issued to the sub-electronic device 700 when the card has been normally authenticated at operation 921.

According to various embodiments of the present disclosure, the sub-electronic device 700 may check the valid term or number of times of use of an already issued card or token and determine whether the valid term has expired or whether expiration of the valid term is imminent (e.g., the card can be used one time or there is one hour before the expiration of the valid term). Further, the sub-electronic device 700 may predict the consumption pattern of a user. According to the various embodiments of the present disclosure, the sub-electronic device 700 may request the electronic device 600 to update the already issued card or token, on the basis of the determination (prediction) described above. In response to the request from the sub-electronic device 700, the electronic device 600 may transfer existing card information of the sub-electronic device 700 to the server 500 to update the card information. Further, according to the various embodiments of the present disclosure, in order to enable the user to be aware of a time point requiring update, the sub-electronic device 700 may notify the user of the time point through various notification methods (e.g., vibration, bell sound, display, and LEDs) through the electronic device 600. Otherwise, the card information may be updated (background processing) without user's awareness.

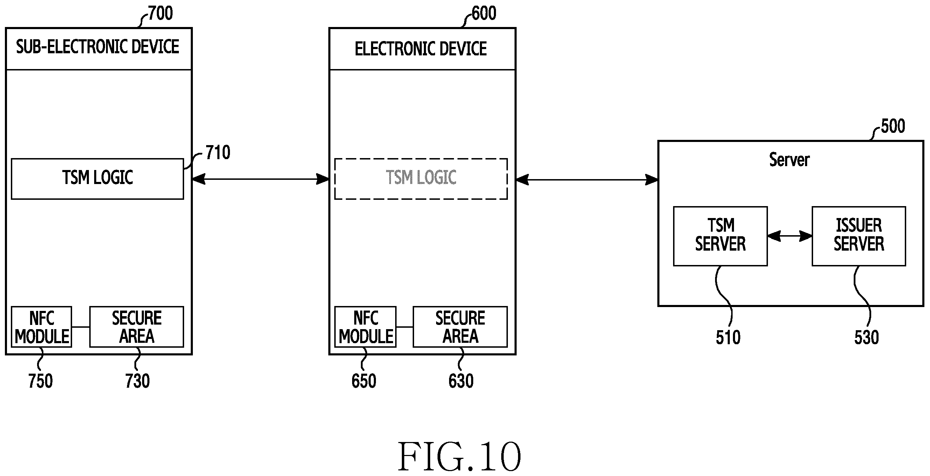

FIG. 10 illustrates a system environment for issuing and authenticating a card according to various embodiments of the present disclosure.

As illustrated in FIG. 10, a system according to various embodiments of the present disclosure may include a server 500, an electronic device 600 (e.g., smart phone), and a sub-electronic device 700 (e.g., wearable device). FIG. 10 is a figure for describing an operation in the case where the sub-electronic apparatus 700 includes a TSM logic (e.g., TSM logic 453 of FIG. 4) for issuance and authentication of a card and uses the electronic device 600 as only a host (e.g., a network proxy) for communication with the server 500 to perform operations for issuance and authentication of a card for the sub-electronic apparatus 700 in various embodiments of the present disclosure, different from the system of FIG. 5 described above. For example, when a card is issued (registered) to and authenticated for the sub-electronic device 700 connected to the electronic device 600 capable of performing communication, the sub-electronic device 700 may use the electronic device 600 as a network proxy.

In FIG. 10, the sub-electronic device 700 includes a TSM logic 710, the electronic device 600 does not include a TSM logic, and the other elements correspond to the elements (e.g., the server 500 including the TSM server 510 and the issuer server 530, the NFC module 650 or 750, and the secure area 630 or 730) described above with reference to FIG. 5. Therefore, a description of the same elements will be omitted or briefly given.

In the case of FIG. 10, different from the case of FIG. 5, although the sub-electronic device 700 includes a TSM logic enabling a direct interaction with the TSM server 510, the sub-electronic device 700 does not have a modem that enables a direct communication with the server 500 through a network, or is in a situation where it is unable to perform the direct communication. In this case, the sub-electronic device 700 may perform a data communication with the server 500, using the connected electronic device 600 capable of performing a network communication by proxy, to perform operations for issuance and authentication of a card. According to one embodiment of the present disclosure, in the case of the system shown in FIG. 10, since the sub-electronic device includes a TSM logic 710 capable of directly interacting with the server 500, the electronic device 600 can perform only a proxy function. Further, even though the electronic device 600 includes a TSM logic (e.g., the TSM logic 610 of the electronic device 600 in FIG. 5), when the sub-electronic device 700 does not include a TSM logic as shown in FIG. 10, the TSM logic may not be separately used.

Hereinafter, operations for issuance (registration) and authentication of a card for the sub-electronic device 700 in the case where the sub-electronic device 700 includes the TSM logic 710 as in the system environment shown in FIG. 10 will be described.

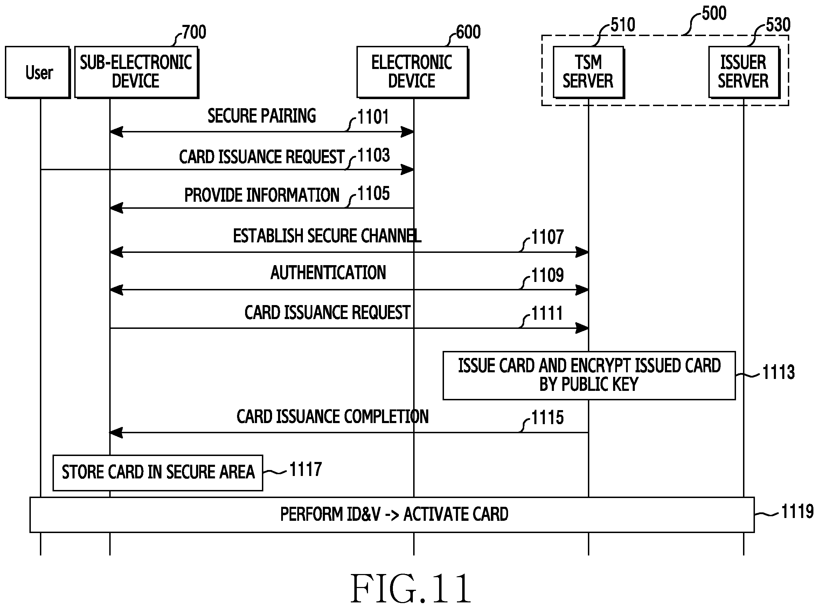

FIG. 11 is a figure for describing an operation of issuing a card in the environment of FIG. 10 in various embodiments of the present disclosure.

Referring to FIG. 11, in operation 1101, the electronic device 600 (e.g., smart phone) and the sub-electronic device 700 (e.g., wearable device) may perform pairing (e.g., secure pairing) on the basis of a secure session. In various embodiments of the present disclosure, the electronic device 600 and the sub-electronic device 700 are established as a logically single device (e.g., companion mode), and communication between the devices may guarantee encrypted security.

In operation 1103, a user may request the electronic device 600 to issue a card for the sub-electronic device 700. According to one embodiment of the present disclosure, a user may select a card to be issued for (to be used by) the sub-electronic device 700 on the basis of a user interface provided by the electronic device 600, and then initiate the card issuing operation. Otherwise, according to another embodiment of the present disclosure, a user may select a card to be issued on the basis of a user interface provided by the sub-electronic device 700, and then initiate the card issuing operation. In response to a user input initiating the card issuing operation, the sub-electronic device 700 may transmit, to the connected electronic device 600, a request signal for requesting issuance of a card according to a user input. In various embodiments of the present disclosure, various information required for issuance of a card for the sub-electronic device 700 may be input through the electronic device 600 or directly input to the sub-electronic device 700 by the user.

In operation 1105, in response to the request according to the initiation of the card issuing operation, the electronic device 600 may transmit, to the connected sub-electronic device 700, identification information (e.g., account, device identifier, possessing card information, etc.) of the electronic device 600 required for issuance of a card for the sub-electronic device 700.

In operation 1107, if the sub-electronic device 700 acquires identification information of the electronic device 600 required for issuance of a card, the sub-electronic device 700 may generate a secure session (e.g., secure channel) between the sub-electronic device 700 and the server 500 (e.g., TSM server 510). According to one embodiment of the present disclosure, the electronic device 600 may apply for a proxy role for communication of the sub-electronic device 700 with the server 500.

In operation 1109, the sub-electronic device 700 and the server 500 may perform authentication (or device authentication) on the basis of a secure session.

In operation 1111, when the authentication with the server 500 is completed, the sub-electronic device 700 may request the server 500 to issue a card. According to one embodiment of the present disclosure, the sub-electronic device 700 may request issuance of a card associated with an account of the electronic device 600 for the sub-electronic device 700. In various embodiments of the present disclosure, when requesting issuance of a card for the sub-electronic device 700, the sub-electronic device 700 may transmit, to the server 500 (e.g., TSM server 510), a device identifier of the sub-electronic device 700 and a public key of the sub-electronic device 700 as well as a device identifier, user information, and account information of the electronic device 600. In various embodiments of the present disclosure, the sub-electronic device 700 may attest (or guarantee) that the sub-electronic device 700 and the electronic device 600 have been logically safely (securely) connected to each other and the request is a request for issuance of a card associated with an account of the sub-electronic device 600.

In operation 1113, in response to the card issuance request for the sub-electronic device 700 associated with the electronic device 600, the server 500 (e.g., TSM server 510) may generate (issue or register) a card for the sub-electronic device 700 and encrypt the generated card by a public key of the sub-electronic device 700. In various embodiments of the present disclosure, the server 500 may manage information that the electronic device 600 and the sub-electronic device 700 have been logically safely connected in the authentication process with the sub-electronic device 700 and a card for the sub-electronic device 700 associated with the account of the electronic device 600 has been issued.

In operation 1115, the server 500 may notify the sub-electronic device 700 of the completion of the issuance of the card for the sub-electronic device 700. In various embodiments of the present disclosure, when the completion of the issuance of the card has been notified of, the server 500 may transfer card information in which the card issued for the sub-electronic device 700 has been encrypted.

In operation 1117, upon receiving the notification of the card issuance completion from the server 500, the sub-electronic device 700 may decrypt the received encrypted card information, using the secret key of the sub-electronic device 700, and store (install) the decrypted information in the secure area 730.

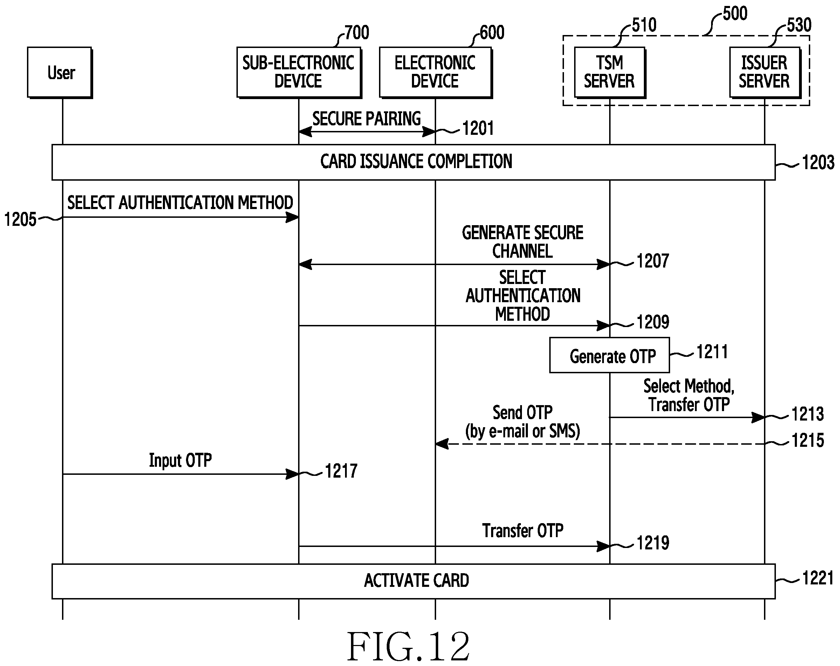

In operation 1119, the sub-electronic device 700 may authenticate (e.g., ID&V) the issued card through the server 500 (e.g., the issuer server 530) and then activate the card. An operation for authenticating an issued card according to various embodiments will be described with reference to FIG. 12.

FIG. 12 is a figure for describing an operation of authenticating a card in the environment of FIG. 10 in various embodiments of the present disclosure.

FIG. 12 illustrates a signal flow in which the sub-electronic device 700 performs an ID&V process, using by only proxy the electronic device 600 connected thereto.

In operation 1201, the electronic device 600 (e.g, smart phone) and the sub-electronic device 700 (e.g., wearable device) are connected to each other through pairing on an encrypted (secure) session. Then, in operation 1203, the card issuance is completed and a card is issued according to a process as described above with reference to FIG. 11.

In operation 1205, a user may select an authentication method for performing the ID&V for a card issued for the sub-electronic device 700. According to one embodiment of the present disclosure, a user may select one method among various authentication methods (e.g., e-mail authentication, SMS authentication, telephone authentication, and application-to-application authentication) for the ID&V on a user interface provided by the sub-electronic device 700. For example, a user may request initiation of a card authentication operation for the issued card using the sub-electronic device 700.

In operation 1207, in response to the request according to the initiation of the card authentication operation, the sub-electronic device 700 may generate a secure session (e.g., secure channel) between the sub-electronic device 700 and the server 500 (e.g., TSM server 510) through the electronic device 600.

In operation 1209, the sub-electronic device 700 may transfer an authentication method selected for the card authentication on the basis of the secure session to the server 500 (e.g., TSM server 510) to request authentication of the card issued for the sub-electronic device 700.

In operation 1211, the server 500 (e.g., TSM server 510) may generate an OTP for authentication (e.g., ID&V) of the card issued to the sub-electronic device 700. Then, in operation 1213, the server 500 may transfer the generated OTP to the issuer server 530 (e.g., a card issuing bank server or a card company server) corresponding to the card, the ID&V of which has been requested.

In operation 1215, the server 500 (e.g., issuer server 530) may transmit the OTP to the sub-electronic device 700 according to a method corresponding to the authentication method (e.g., ID&V method) selected by the sub-electronic device 700, using registered customer information (e.g., phone number and e-mail).

In operation 1217, the user may input, to the sub-electronic device 700, the OTP received from the server 500 through the sub-electronic device 700, and request identification thereof. According to one embodiment of the present disclosure, the sub-electronic device 700 may receive an OTP corresponding to a selected authentication method from the server 500 and may output the received OTP according to the selected authentication method. For example, the electronic device may display OTP information when the selected authentication method is an e-mail authentication or SMS authentication, and may output an alarm for a call received from the server 500 when the selected authentication method is a telephone authentication. The user may identify the OTP received according to the selected authentication method and may input the identified OTP through the sub-electronic device 700.

In operation 1219, in response to the request for identification of the input OTP from the user, the sub-electronic device 700 may transfer the input OTP to the server 500 (e.g., TSM server 510) to request ID&V identification.

In operation 1221, when the ID&V process is normally completed through the server 500, for example, when a synchronization state for the OTP is established between the sub-electronic device 700 and the server 500, the issued card may be activated.

According to various embodiments as described above, when the sub-electronic device 700 includes a TSM logic, the sub-electronic device 700 may perform the communication with the server 500, using the connected electronic device 600 by proxy, and thus can directly deal with a process relating to the issuance and authentication of a card.

As described above, an electronic device (e.g., the electronic device 600) according to various embodiments of the present disclosure may include: a first communication interface for communication with a server; a second communication interface for establishing pairing of a secure session with a sub-electronic device; a memory including a secure area; and one or more processors functionally coupled to the first communication interface, the second communication interface, and the memory, wherein the memory includes one or more commands, wherein the memory stores commands to make, at the time of execution, the one or more processors, when the commands are executed by the processors, the operations of: acquiring information of the sub-electronic device when starting issuance and authentication of a card for the sub-electronic device; transferring the acquired information to the server and guaranteeing the sub-electronic device to the server to request issuance and authentication of the card for the sub-electronic device; and receiving a result of processing of the issuance and authentication of the card from the server and transferring the result to the sub-electronic device.

According to various embodiments of the present disclosure, the one or more processors may be configured to, when starting the operations for issuance of the card for the second external electronic device, certify to the first external electronic device that the second external electronic device and the electronic device are logically established as a single device and that the second external electronic device is a safe device.

According to various embodiments of the present disclosure, the one or more processors may be configured to, when starting the operations for authentication of the card for the second external electronic device, request the first external electronic device to transmit a OTP in a method corresponding to an authentication method selected by the second external electronic device and transfer the received OTP information to the second external electronic device in the method corresponding to the selected authentication method.

According to various embodiments of the present disclosure, the one or more processors may be configured to include a trusted service management (TSM) logic for establishing a path allowing the first external electronic device to access a security area of the memory and perform the authentication process relating to card issuance and authentication with the first external electronic device on the basis of the TSM logic.

According to various embodiments of the present disclosure, the one or more processors may be configured to operate as a network proxy of the second external electronic device in the issuance and authentication of the card for the second external electronic device.

As described above, an electronic device (e.g., the sub-electronic device 700) according to various embodiments of the present disclosure may include: a communication interface for establishing pairing of a secure session with an electronic device capable of performing communication with a server; a memory including a secure area; and one or more processors functionally coupled to the memory, wherein the one or more processors may include a device configured to execute the operations of: determining whether an electronic device paired by a secure session exists, when starting issuance and authentication of a card for a sub-electronic device; providing information of the sub-electronic device to the paired electronic device; and receiving a result of processing of the issuance and authentication of the card from the electronic device, decrypting the received result, and storing the result in the secure area.

As described above, an electronic device (e.g., the sub-electronic device 700) according to various embodiments of the present disclosure may include: a communication interface configured to establish, using a communication protocol, a wireless communication with an electronic device capable of establishing a wireless communication with an external electronic device; a memory; and one or more processors electrically connected with the memory and the communication interface, wherein the memory stores instructions to make, at the time of execution, the one or more processors: transmit information associated with a sub-electronic device to the electronic device; using the communication interface, receive payment information (e.g., encrypted card information or token data) to be used in the sub-electronic device from the electronic device; and decrypt the received payment information and store the decrypted information in the memory.

According to various embodiments of the present disclosure, the one or more processors may be configured to, when starting operations for issuance of a card for the sub-electronic device, in response to a user input or a request from the electronic device, transfer information associated with the sub-electronic device to the electronic device and entrust operations of the sub-electronic device for the issuance of the card, and the information associated with the sub-electronic device may include a device identifier of the sub-electronic device and the public key of the sub-electronic device.

According to various embodiments of the present disclosure, the one or more processors may be configured to perform the operations of: when starting operations for authentication of the card for the sub-electronic device, requesting the electronic device to transmit OTP information in a method corresponding to a selected authentication method; receiving the OTP information in the method corresponding to the selected authentication method from the electronic device and outputting the OTP information; and transferring an OTP input based on the received OTP information to the electronic device.

According to various embodiments of the present disclosure, the one or more processors may be configured to include a TSM logic for establishing a path allowing the first external electronic device to access a security area of the memory and perform operations relating to the card issuance and authentication with the first external electronic device on the basis of the TSM logic.

According to various embodiments of the present disclosure, the one or more processors may be configured to communicate with the external electronic device, using the electronic device as a network proxy in the issuance and authentication of the card for the sub-electronic device.

According to various embodiments of the present disclosure, the one or more processors may be configured to determine a use-allowed state on the basis of the payment information and perform an update of the payment information on the basis of a result of the determination.

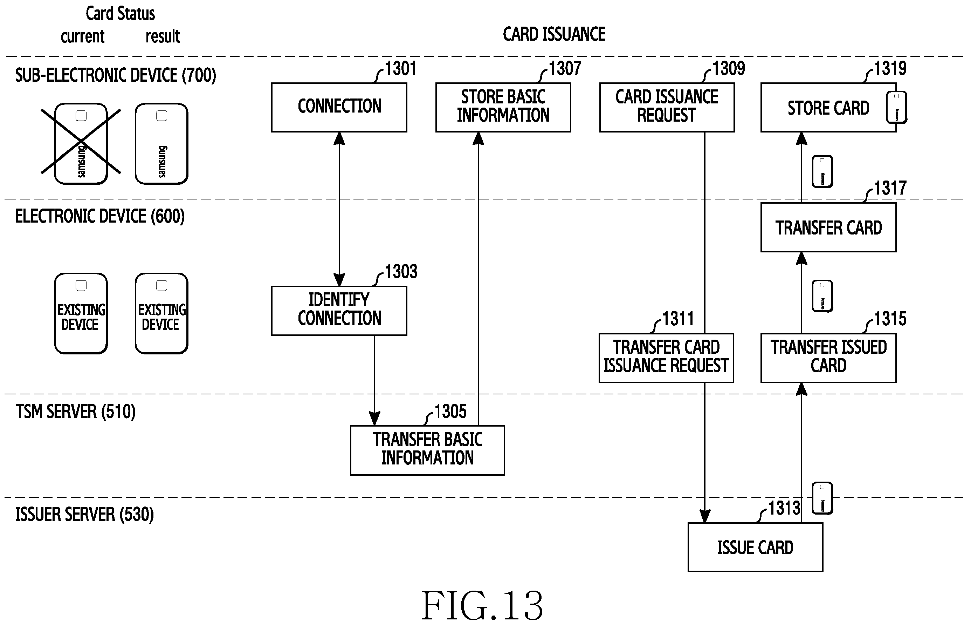

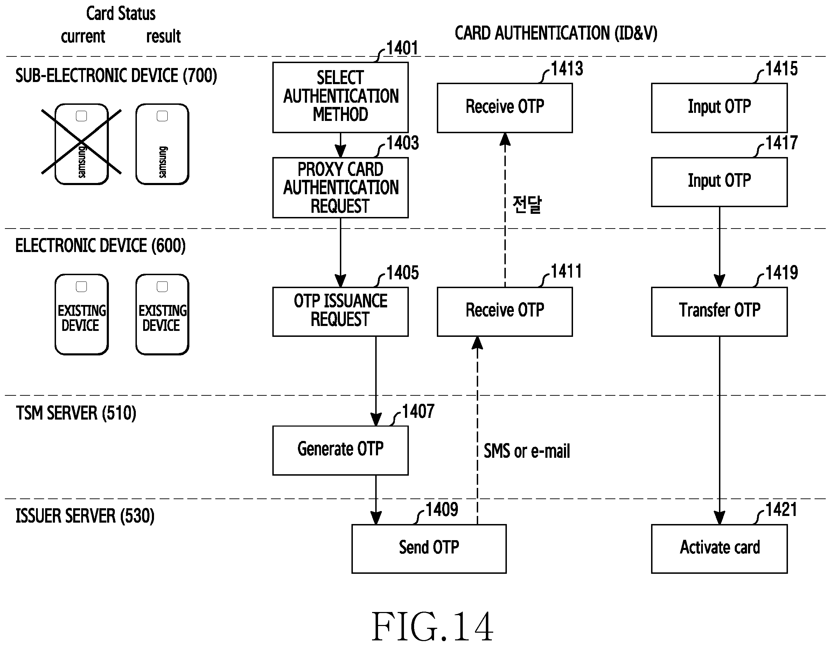

According to various embodiments of the present disclosure, the electronic device 600 may possess a card already issued thereto, and the sub-electronic device 700 may perform operations for issuance (registration) and authentication of the card already issued to the electronic device 600. FIGS. 13 and 14 illustrate a card authentication scenario according to various embodiments of the present disclosure.

FIG. 13 is a figure for describing an operation of issuing a card in a system according to various embodiments of the present disclosure.

FIG. 13 illustrates a signal flow in a case where a card already issued to an electronic device 600 is issued again to the sub-electronic device 700 connected to the electronic device 600. For example, when the electronic apparatus 600 and the sub-electronic device 700 are connected with each other or a proper environment including a payable application is established after connection between them, the sub-electronic device 700 may activate an application capable of treating the payment.

In various embodiments of the present disclosure, when the electronic device 600 has a usable card which has been already issued and authenticated, the electronic device 600 may transfer metadata of the card to the sub-electronic device 700. In various embodiments of the present disclosure, data including metadata may include an account ID, a device identifier of the electronic device 600, and basic information of the card or token. In various embodiments of the present disclosure, the transmissible basic information of the card or token may include basic information such a card company name and an image.

In various embodiments of the present disclosure, the electronic device 600 may use, in operations to issue a card to the sub-electronic device 700, the data provided when the card is issued as described above. According to one embodiment of the present disclosure, the electronic device 600 may be a device already authenticated (guaranteed) by the TSM server 510, and a card may be simply and easily issued to the sub-electronic device 700 also without actual data of a plastic card on the basis of information of the card or token issued to the electronic device 600. In various embodiments of the present disclosure, the token information of the card issued to the sub-electronic device 700 may be equal to or different from the token information (token ID) of the card already issued to the electronic device 600. In one embodiment of the present disclosure, the token information (token ID) may serve as a basis for an interpretation that the sub-electronic device 700 and the electronic device 600 are a single storage area. For example, when a card use (payment) is performed in the sub-electronic device 700 or the electronic device 600, information (e.g., the number of times of use, duration, and paid amount) relating to a corresponding card may be changed in both of the devices, like a processing in a single card.

According to various embodiments of the present disclosure, the sub-electronic device 700 may check the valid term or number of times of use of an already issued card or token and determine whether the valid term has expired or whether expiration of the valid term is imminent (e.g., the card can be used one time or there is one hour before the expiration of the valid term). Further, the sub-electronic device 700 may predict the consumption pattern of a user. According to the various embodiments of the present disclosure, the sub-electronic device 700 may request the electronic device 600 to update the already issued card or token, on the basis of the determination (prediction) described above. In response to the request from the sub-electronic device 700, the electronic device 600 may transfer existing card information of the sub-electronic device 700 to the server 500 to update the card information. Further, according to the various embodiments of the present disclosure, in order to enable the user to be aware of a time point requiring update, the sub-electronic device 700 may notify the user of the time point through various notification methods (e.g., vibration, bell sound, display, and LEDs) through the electronic device 600. Otherwise, the card information may be updated (background processing) without user's awareness.

As shown in FIG. 13, the electronic device 600 may possess (store) at least one already-issued card. Then, the electronic device 600 and the sub-electronic device 700 may be paired through an encryption (secure) session at operations 1301 and 1303. Upon identifying the connection with the sub-electronic device 700, the electronic device 600 may transfer basic information of the already-issued card (or token) to the TSM server 510. The electronic device 600 may certify the sub-electronic device 700 to the TSM server 510 as described above, while transferring the basic information.

Upon receiving, from the electronic device 600, the basic information of the card already issued to the electronic device 600, the TSM server 510 may transfer the basic information to the sub-electronic device 700 certified by the electronic device 600 at operation 1305.

The sub-electronic device 700 may receive, from the TSM server 510, the basic information of the card already issued to the electronic device 600, and store the received basic information in the secure area 730 at operation 1307.

The user may request issuance of a card through the sub-electronic device 700 in order use, in the sub-electronic device 700, the available card which has been issued and authenticated to the electronic device 600 at operation 1309.

In response to the request for issuance of the card from the user, the sub-electronic device 700 may transfer the request to the electronic device 600 on the basis of the basic information already stored in the secure area 730 at operation 1311.

In response to the request for processing in relation to the issuance of the card for the sub-electronic device 700, the electronic device 600 may request the server 500 (e.g., TSM server 510) to issue the card for the sub-electronic device 700 at operation 1311. According to one embodiment of the present disclosure, the electronic device 600 may receive basic information relating to the card from the sub-electronic device 700, and request the issuer server 530 to issue a card corresponding to the received basic information.

The issuer server 530 may receive, from the electronic device 600, the request for issuance of the card corresponding to the basic information to the sub-electronic device 700. In response to the card issuance request, the issuer server 530 may issue the card for the sub-electronic device 700, and transfer the issued card to the electronic device 600 at operation 1313. According to one embodiment of the present disclosure, the issuer server 530 may identify the basic information to authenticate that the issuance-requested card corresponds to the available card which has been already issued and authenticated to the electronic device 600. The issuer server 530 may further perform an operation of encrypting the card issued for the sub-electronic device 700 by the public key of the sub-electronic device 700.

When receiving the issued card for the sub-electronic device 700 from the issuer server 530 at operation 1315, the electronic device 600 may transfer the received card to the sub-electronic device 700 at operation 1317.

The sub-electronic device 700 may receive the issued card from the electronic device 600 and store the card in the secure area 730 (at operation 1319). According to one embodiment of the present disclosure, the sub-electronic device 700 may decrypt the encrypted card information or token data by its own secret key and then store the decrypted information in the secure area 730. In various embodiments of the present disclosure, the card information of the card issued to the sub-electronic device 700 may be equal to or different from the card information of the card already issued to the electronic device 600. Thereafter, when a user uses (makes a payment) the card in the sub-electronic device 700 or the electronic device 600, information (e.g., the number of times of use, duration, and paid amount) relating to the card may be changed in both of the devices, like a processing in a single card.

FIG. 14 is a figure for describing an operation of authenticating a card in a system according to various embodiments of the present disclosure.

FIG. 14 illustrates a signal flow in a case where a card already issued to an electronic device 600 is authenticated for the sub-electronic device 700 connected to the electronic device 600. The basic operation flow in FIG. 14 may correspond to the authentication flow for the card issued to the sub-electronic device 700 described above with reference to FIG. 9. For example, operations 1401 to 1421 of FIG. 14 may correspond to operations 901 to 921 of FIG. 9.

In various embodiments of the present disclosure, in the authentication operation of FIG. 14, the electronic device 600 may have a usable card which has been already issued and authenticated, different from the authentication operation of FIG. 9. The process of FIG. 14 is different from that of FIG. 9 in that the same type of card as the card issued to the electronic device 600 is issued to the sub-electronic device 700 and authentication is performed for the card issued to the sub-electronic device 700, and the actual operation flow is the same, so a detailed description thereof will be omitted here.

For example, in the authentication process of FIG. 14, likewise to the authentication process of FIG. 9 described above, the electronic device 600 may transfer, by proxy, data requested by the sub-electronic device 700 to the server 500 (e.g., TSM server 510 or issuer server 530), and receive data from the server 500 (e.g., TSM server 510 or issuer server 530) and transfer the data to the sub-electronic device 700. Then, the card or token that has been authenticated (e.g., ID&V) is activated to be used for a card settlement (payment) in accordance with information (e.g., the number of times of use, data relating to use term) contained in a key.

According to various embodiments of the present disclosure, the sub-electronic device 700 may check the valid term or number of times of use of an already issued card or token and determine whether the valid term has expired or whether expiration of the valid term is imminent (e.g., the card can be used one time or there is one hour before the expiration of the valid term). Further, the sub-electronic device 700 may predict the consumption pattern of a user. According to the various embodiments of the present disclosure, the sub-electronic device 700 may request the electronic device 600 to update the already issued card or token, on the basis of the determination (prediction) described above. In response to the request from the sub-electronic device 700, the electronic device 600 may transfer existing card information of the sub-electronic device 700 to the server 500 (e.g., TSM server 510 or issuer server 530) to update the card information. Further, according to the various embodiments of the present disclosure, in order to enable the user to be aware of a time point requiring update, the sub-electronic device 700 may notify the user of the time point through various notification methods (e.g., vibration, bell sound, display, and LEDs) through the electronic device 600. Otherwise, the card information may be updated (background processing) without user's awareness.

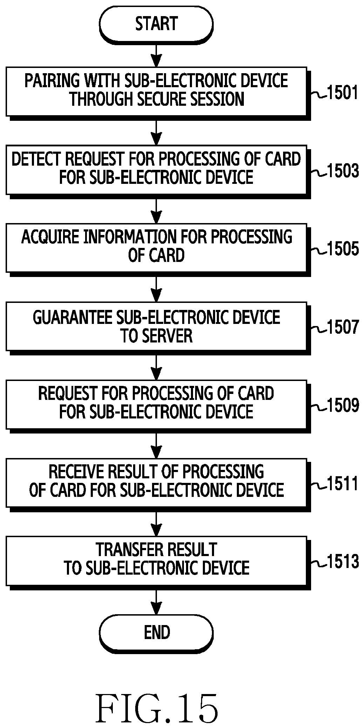

FIG. 15 is a flowchart illustrating a process in which an electronic device according to various embodiments of the present disclosure performs, by proxy, operations for issuance and authentication of a card for a sub-electronic device.

In the description of FIG. 15, for the convenience of description, the agent performing the operations of FIG. 15 is the electronic device 600. However, the operations may be performed by one or more processors or based on one or more commands. According to one embodiment of the present disclosure, when the electronic device 400 of FIG. 4 operates as the electronic device 600, the operations of FIG. 15 may be configured to be performed by the controller 480 of the electronic device 400.

In operation 1501, the electronic device 600 may be paired with the sub-electronic device 700 on the basis of a secure session. In various embodiments of the present disclosure, the sub-electronic device 700 may be a device which is unable to use a network or lacks a modem capable of communicating with the server 500. In various embodiments of the present disclosure, the sub-electronic device 700 may connect to the electronic device 600 capable of communicating with the server 500 to perform card processing operations using the electronic device 600. In various embodiments of the present disclosure, a secure connection may be established between the sub-electronic device 700 and the electronic device 600.

In operation 1503, the electronic device 600 (e.g., the controller 480 of FIG. 4) may detect, in the state where it has been paired with the sub-electronic device 700, a request for card processing (e.g., card issuance and/or authentication) for the sub-electronic device 700. According to one embodiment of the present disclosure, using the electronic device 600 or the sub-electronic device 700, the user may request initiation of an operation for issuance of the card for the sub-electronic device 700 or an operation for authenticating the card issued to the sub-electronic device 700. When receiving the request for the initiation of card processing operations from the user, the sub-electronic device 700 may request the electronic device 600 to start the card processing operations.

In operation 1505, the electronic device 600 may acquire information for card processing operations of the sub-electronic device 700. In various embodiments of the present disclosure, in response to the request for the initiation of card processing operations, the electronic device 600 may request the sub-electronic device 700 to provide information required for issuance of the card and receive the information from the sub-electronic device 700. In various embodiments of the present disclosure, the information may include a device identifier of the sub-electronic device 700 and a public key of the sub-electronic device 700.

In operation 1507, the electronic device 600 may guarantee the sub-electronic device 700 to the server 500 for issuance of the card to the sub-electronic device 700. According to one embodiment of the present disclosure, the electronic device 600 may certify to the server 500 that the sub-electronic device 700 requesting issuance or authentication of the card is a device logically safely connected to the electronic device 600.

In operation 1509, the electronic device 600 may request card processing operations for the sub-electronic device 700. According to one embodiment of the present disclosure, the electronic device 600 may transfer, to the server 500, a request for issuance of a card relating to an account of the electronic device 600 or a request for authentication of the card issued to the sub-electronic device 700.

In operation 1511, the electronic device 600 may receive a result of treatment of the card processing request from the server 500. According to one embodiment of the present disclosure, in response to the card issuance request from the electronic device 600, the server 500 may transfer the card information encrypted using the public key of the sub-electronic device 700 to the electronic device 600, and the electronic device 600 may receive, from the server 500, the encrypted card information corresponding to the request for the card issuance from the sub-electronic device 700. Otherwise, in response to the card issuance request from the electronic device 600, the server 500 may transfer OTP information to the electronic device 600 in a method corresponding to an authentication method selected by the sub-electronic device 700, and the electronic device 600 may receive, from the server 500, the OTP information in the method corresponding to the selected authentication method.

In operation 1513, the electronic device 600 may transfer the processing result received from the server 500 to the sub-electronic device 700.

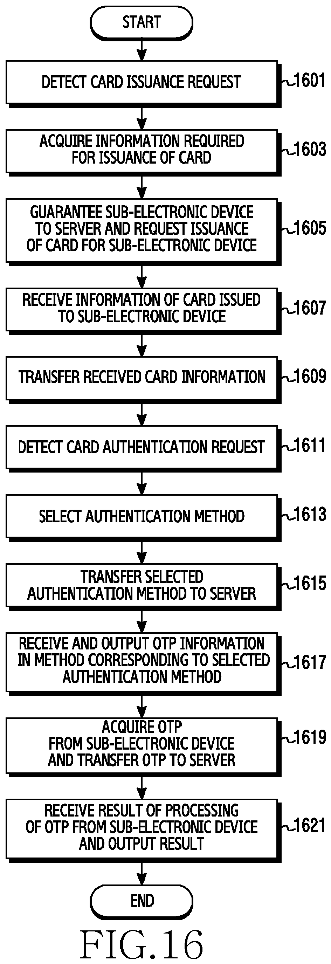

FIG. 16 is a flowchart illustrating a process in which an electronic device according to various embodiments of the present disclosure performs, by proxy, operations for issuance and authentication of a card for a sub-electronic device.

In the description of FIG. 16, for the convenience of description, the agent performing the operations of FIG. 16 is the electronic device 600. However, the operations may be performed by one or more processors or based on one or more commands. According to one embodiment of the present disclosure, when the electronic device 400 of FIG. 4 operates as the electronic device 600, the operations of FIG. 16 may be configured to be performed by the controller 480 of the electronic device 400.

In operation 1601, the electronic device 600 may detect a request for card issuance. According to one embodiment of the present disclosure, when it is necessary to issue a card for the sub-electronic device 700, a user may request issuance of a card through the electronic device 600 which can perform network communication and is connected to the sub-electronic device 700. For example, using the electronic device 600 or the sub-electronic device 700, the user may request initiation of operations for issuance of the card for the sub-electronic device 700. When receiving the request for the initiation of card issuance operations from the user, the sub-electronic device 700 may request the electronic device 600 to start the card issuance operations.

In operation 1603, the electronic device 600 may acquire information required for card issuance. According to one embodiment of the present disclosure, when detecting the initiation of operations for issuance of the card for the sub-electronic device 700, the electronic device 600 may request the sub-electronic device 700 to provide information required for issuance of the card and receive the information required for issuance of the card from the sub-electronic device 700. In various embodiments of the present disclosure, the information required for issuance of the card may include the device identifier (e.g., device ID) or public key of the sub-electronic device 700.

In operation 1605, the electronic device 600 may request issuance of the card for the sub-electronic device 700 while guaranteeing the sub-electronic device 700 to the server 500. According to one embodiment of the present disclosure, the electronic device 600 may certify to the server 500 that the sub-electronic device 700 requesting issuance of the card is a device logically safely connected to the electronic device 600, and request the server 500 to issue a card associated with an account of the electronic device 600 to the sub-electronic device 700. In various embodiments of the present disclosure, the electronic device 600 may transfer the request for issuance of the card for the sub-electronic device 700 to the TSM server (e.g., card or token issuance processing server) 510 at least partly on the basis of the information received from the sub-electronic device 700.

In operation 1607, in response to the request for issuance of the card, the electronic device 600 may receive information of the card issued to the sub-electronic device 700 from the server 500. According to one embodiment of the present disclosure, in response to the card issuance request from the electronic device 600, the server 500 may transfer the card information encrypted using the public key of the sub-electronic device 700 to the electronic device 600. In various embodiments of the present disclosure, the information of the card issued from the server 500 (e.g., TSM server 510) may be transferred to the sub-electronic device 700 through the electronic device 600 and then stored in the secure area 730 of the sub-electronic device 700. Here, if the card has not been normally stored, the sub-electronic device 700 and the electronic device 600 may return to the initial stage and perform the card issuance operations again.

In operation 1609, the electronic device 600 may transfer the received card information to the sub-electronic device 700. In various embodiments of the present disclosure, the server 500 may encrypt and transfer the card information on the basis of the public key of the sub-electronic device 700, while the electronic device 600 is unable to read the received card information and is only able to transfer the received card information to the sub-electronic device 700.

In operation 1611, the electronic device 600 may detect a request for authentication of the card issued to the sub-electronic device 700. According to one embodiment of the present disclosure, using the electronic device 600 or the sub-electronic device 700, the user may request initiation of operations for authentication of the card already issued to the sub-electronic device 700, in order to activate the card.

When detecting the initiation of operations for authentication of the card already issued to the sub-electronic device 700, the electronic device 600 selects an authentication method in operation 1613. Then, in operation 1615, the electronic device 600 may transfer the selected authentication method to the server 500 to request the server 500 to transmit OTP information according to the selected authentication method. In various embodiments of the present disclosure, when the card has been normally issued to the sub-electronic device 700, an authentication method (e.g., term & condition (T&C)) for issuance of the OTP may be selected. For example, on the basis of the electronic device 600 or the sub-electronic device 700, the user may select a method from among methods based on e-mail, SMS, call connection, and application-to-application. The selected authentication method may be transferred to the electronic device 600 to request the server 500 to transmit the OTP information.

In operation 1617, the electronic device 600 may receive OTP information and output the received OTP information in a method corresponding to the selected authentication method. In various embodiments of the present disclosure, when the electronic device 600 has requested transmission of the OTP information by an e-mail or SMS, the electronic device 600 may correspondingly receive the OTP information through an e-mail or SMS from the server 500, and provide the received OTP information to the sub-electronic device 700. Otherwise, when the electronic device 600 has requested transmission of the OTP information by a call connection, the electronic device 600 may correspondingly process call connection with the server 500 (e.g., a call center) and process call forwarding with the sub-electronic device 700 to provide the received OTP information to the sub-electronic device 700. In various embodiments of the present disclosure, when the electronic device 600 has not received OTP information from the server 500, the electronic device 600 may wait until the OTP information is received from the server 500 or request the information again.

In operation 1619, upon receiving (acquiring) the OTP from the sub-electronic device 700, the electronic device 600 may transfer the received OTP to the server 500. According to an embodiment of the present disclosure, when receiving the OTP information from the electronic device 600, the sub-electronic device 700 may request the electronic device 600 to transfer the OTP to the server 500 through automatic input of the OTP or manual input of the OTP by the user. In various embodiments of the present disclosure, the electronic device 600 may transfer input text data corresponding to the e-mail or SMS to the server 500 or transfer key data input according to call connection to the server 500.

In operation 1621, the electronic device 600 may receive and output a result of processing of the input OTP from the server 500. According to one embodiment of the present disclosure, when the OTP has been input and the server 500 identifies that the input OTP is correct, the server 500 may issue data (e.g., token data or key data) for activating the card. The electronic device 600 may receive the data issued by the server 500 and transfer the data to the sub-electronic device 700 to store the data. The sub-electronic device 700 may transfer the data, which has been transferred from the electronic device 600, to the secure area 730 (e.g., TEE) to store the data. Thereafter, the sub-electronic device 700 may perform settlement or payment through the received data.

As described above, an operation method of an electronic device (e.g., the electronic device 600) according to various embodiments of the present disclosure may include: detecting a start of operations for issuing and authenticating a card for a sub-electronic device connected through a secure session; acquiring information of the sub-electronic device; transferring the acquired information to a server guaranteeing the sub-electronic device to the server to request issuance and authentication of the card for the sub-electronic device; and receiving a result of processing of the issuance and authentication of the card from the server and transferring the result to the sub-electronic device.

As described above, an operation method of an electronic device (e.g., the electronic device 600) according to various embodiments of the present disclosure may include: receiving information associated with a connected second external electronic device (e.g., the sub-electronic device 700) from the second external electronic device, using a second communication interface; transmitting the information to a first external electronic device (e.g., the server 500), using a first communication interface; receiving authentication information relating to an authentication process for the second external electronic device based on the information, using the first communication interface; performing an authentication process with the second external electronic device, using the authentication information; receiving payment information to be used in the second external electronic device from the first external electronic device, using the first communication interface; and transmitting the payment information to the second external electronic device, using the second communication interface.

According to various embodiments of the present disclosure, the operation method may include an operation of certifying to the first external electronic device that the second external electronic device and the electronic device are logically established as a single device and the second external electronic device is a safe device. The operation method may include an operation of receiving encrypted card information corresponding to the request for issuance of the card from the first external electronic device and transferring the received card information to the second external electronic device without storing the information, and the encrypted card information may include information encrypted by a public key of the second external electronic device in the first external electronic device.

According to various embodiments of the present disclosure, the operation method may include the operations of: when starting the operations for authentication of the card for the second external electronic device, receiving an authentication method selected by the second external electronic device; requesting the first external electronic device to transmit One Time Password (OTP) information in a method corresponding to the selected authentication method; and transferring the OTP information received from the first external electronic device to the second external electronic device in the method corresponding to the selected authentication method.

According to various embodiments of the present disclosure, the operation method may further include an operation of operating as a network proxy of the second external electronic device in the issuance and authentication of the card for the second external electronic device.

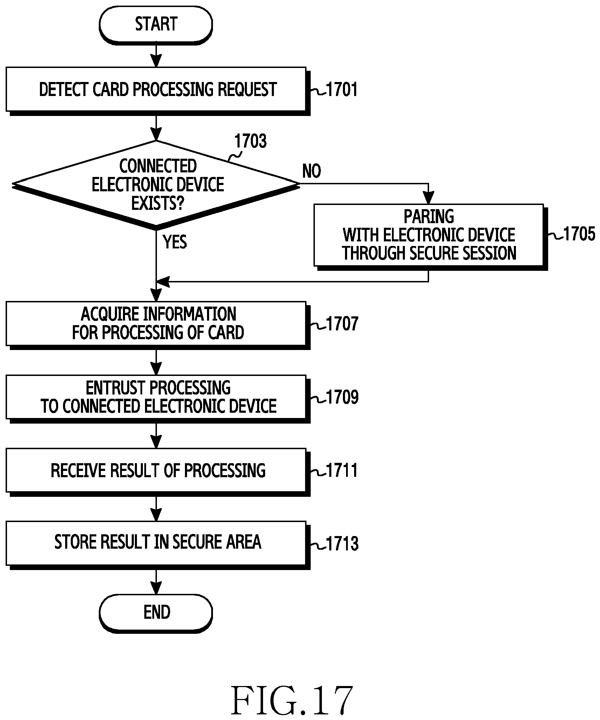

FIG. 17 is a flowchart illustrating a process in which a sub-electronic device according to various embodiments of the present disclosure performs, in association with an electronic device, operations for issuance and authentication of a card.

In the description of FIG. 17, for the convenience of description, the agent performing the operations of FIG. 17 is the sub-electronic device 700. However, the operations may be performed by one or more processors or may be based on one or more commands. According to one embodiment of the present disclosure, when the electronic device 400 of FIG. 4 operates as the sub-electronic device 700, the operations of FIG. 17 may be configured to be performed by the controller 480 of the electronic device 400.

In operation 1701, the sub-electronic device 700 (e.g., the controller 480 of FIG. 4) may detect a request for card processing. According to one embodiment of the present disclosure, using the sub-electronic device 700, the user may request initiation of operations for issuance of the card for the sub-electronic device 700 or operations for authenticating the card issued to the sub-electronic device 700.

In operation 1703, in response to the request for processing of the card, the sub-electronic device 700 may determine whether there is an electronic device 600 connected thereto, which can perform communication.

As a result of the determination in operation 1703, when the sub-electronic device 700 determines that an electronic device 600 connected thereto does not exist (NO in operation 1703), the sub-electronic device 700 may search for a surrounding electronic device 600, which can be connected thereto, and may be paired with a found electronic device 600 on the basis of a secure session.

In operation 1703, when the sub-electronic device 700 determines that a connected electronic device 600 exists (an example of operation 1703), or is paired with the electronic device 600 through the operation 1705, the sub-electronic device 700 may acquire information for card processing of the sub-electronic device 700 in operation 1707. In various embodiments of the present disclosure, the information may include a device identifier of the sub-electronic device 700 and a public key of the sub-electronic device 700.

In operation 1709, the sub-electronic device 700 may entrust the connected electronic device 600 to perform the card processing. According to one embodiment of the present disclosure, the sub-electronic device 700 may transfer information for card processing to the electronic device 600 or request the electronic device 600 to perform operations for the card processing with the server 500 on the basis of the information.

In operation 1711, the sub-electronic device 700 may receive a result of treatment of the card processing request from the server 500. According to one embodiment of the present disclosure, in response to the request for card issuance to the sub-electronic device 700 from the electronic device 600, the server 500 may transfer the card information encrypted using the public key of the sub-electronic device 700 to the electronic device 600. Then, the electronic device 600 may receive, from the server 500, the encrypted card information corresponding to the request for the issuance of the card by the sub-electronic device 700, and then transfer the card information to the sub-electronic device 700. Otherwise, in response to the card authentication request for the sub-electronic device 700 from the electronic device 600, the server 500 may transfer the OTP information to the electronic device 600 in a method corresponding to the authentication method selected by the sub-electronic device 700. Then, the electronic device 600 may receive, from the server 500, the OTP information in the method corresponding to the selected authentication method, and then transfer the OTP information to the sub-electronic device 700.

In operation 1713, the sub-electronic device 700 may store the processing result received from the electronic device 600 in the secure area 730 of the sub-electronic device 700.

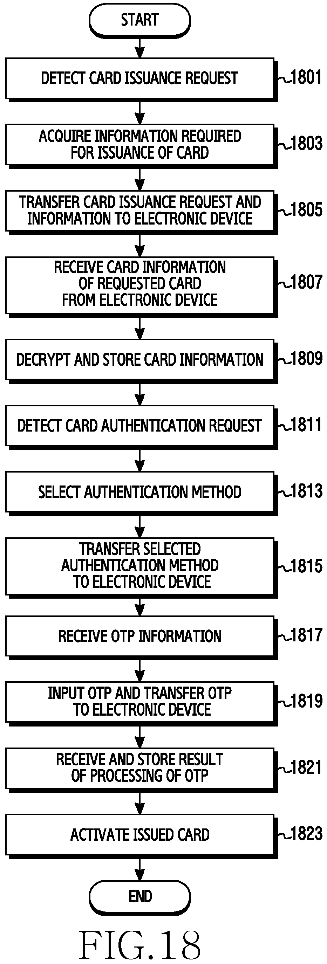

FIG. 18 is a flowchart illustrating a process in which a sub-electronic device according to various embodiments of the present disclosure performs, in association with an electronic device, operations for issuance and authentication of a card.

In the description of FIG. 18, for the convenience of description, the agent performing the operations of FIG. 18 is the sub-electronic device 700. However, the operations may be performed by one or more processors or may be based on one or more commands. According to one embodiment of the present disclosure, when the electronic device 400 of FIG. 4 operates as the sub-electronic device 700, the operations of FIG. 18 may be configured to be performed by the controller 480 of the electronic device 400.

In operation 1801, the electronic device 700 may detect a request for card issuance. According to one embodiment of the present disclosure, when it is necessary to issue a card for the sub-electronic device 700, a user may request initiation of operations for issuance of a card through the electronic device 600 which can perform network communication and is connected to the sub-electronic device 700. In response to the initiation of the card issuance operations of the sub-electronic device 700, the electronic device 600 may request the sub-electronic device 700 to provide information necessary for the card issuance. Otherwise, using the sub-electronic device 700, the user may directly request initiation of operations for issuance of the card for the sub-electronic device 700.

In operation 1803, the electronic device 700 may acquire information required for card issuance. In various embodiments of the present disclosure, the information may include a device identifier of the sub-electronic device 700 and a public key of the sub-electronic device 700.

In operation 1805, in response to the request for issuance of the card, the sub-electronic device 700 may transfer, to the electronic device 600, the card issuance request and information for the sub-electronic device 700.

In operation 1807, in response to the request for issuance of the card, the sub-electronic device 700 may receive information of the card issued to the sub-electronic device 700 from the electronic device 600. According to one embodiment of the present disclosure, the electronic device 600 may receive, from the server 500, card information encrypted using the public key of the sub-electronic device 700, and transfer the received card information to the sub-electronic device 700.

In operation 1809, the sub-electronic device 700 may decrypt and store the encrypted card information transferred through the electronic device 600. According to one embodiment of the present disclosure, the sub-electronic device 700 may decrypt the card information encrypted using the secret key of the sub-electronic device 700, and store the decrypted card information in the secure area 730 of the sub-electronic device 700.

In operation 1811, the sub-electronic device 700 may detect a request for authentication (ID&V) for the card issued to the sub-electronic device 700 and stored in the security area 730. According to one embodiment of the present disclosure, using the electronic device 600 or the sub-electronic device 700, the user may request initiation of operations for authentication of the card already issued to the sub-electronic device 700, in order to activate the card.

The sub-electronic device 700 may select an authentication method for card authentication in operation 1813. Then, in operation 1815, the sub-electronic device 700 may transfer the selected authentication method to the electronic device 600 to acquire OTP information corresponding to the selected authentication method. In various embodiments of the present disclosure, when the card has been normally issued to the sub-electronic device 700, an authentication method for issuance of the OTP may be selected. For example, on the basis of the electronic device 600 or the sub-electronic device 700, the user may select an authentication method from among methods based on e-mail, SMS, call connection, and application-to-application. The selected authentication method may be transferred to the electronic device 600 to request the server 500 to transmit the OTP information.

In operation 1817, the sub-electronic device 700 may receive OTP information transferred from the server 500 through the electronic device 600. In various embodiments of the present disclosure, when the electronic device 600 has requested transmission of the OTP information by an e-mail or SMS, the electronic device 600 may correspondingly receive the OTP information through an e-mail or SMS from the server 500, and provide the received OTP information to the sub-electronic device 700. Otherwise, when the electronic device 600 has requested transmission of the OTP information by a call connection, the electronic device 600 may correspondingly process call connection with the server 500 (e.g., a call center) and process call forwarding with the sub-electronic device 700 to provide the received OTP information to the sub-electronic device 700.

In operation 1819, the sub-electronic device 700 may receive an OTP input corresponding to the received OTP information and transfer the received OTP input to the electronic device 600. According to an embodiment of the present disclosure, when receiving the OTP information from the electronic device 600, the sub-electronic device 700 may request the electronic device 600 to transfer the OTP to the server 500 through automatic input of the OTP or manual input of the OTP by the user. In various embodiments of the present disclosure, the sub-electronic device 700 may transfer input text data corresponding to the e-mail or SMS to the electronic device 600 or transfer key data input according to call connection to the electronic device 600.

In operation 1821, the sub-electronic device 700 may receive a result of processing of the input OTP from the electronic device 600 and store the result. According to one embodiment of the present disclosure, when the OTP has been input and the server 500 identifies that the input OTP is correct, the server 500 may issue data (e.g., token data or key data) for activating the card. The electronic device 600 may receive the data issued by the server 500 and transfer the data to the sub-electronic device 700 to store the data. The sub-electronic device 700 may transfer the data, which has been transferred from the electronic device 600, to the secure area 730 (e.g., TEE) to store the data.

In operation 1823, in accordance with a result of the processing of the OTP, the sub-electronic device 700 may activate the card on the basis of authentication (e.g., ID&V) of the already issued card by the server 500. Thereafter, the sub-electronic device 700 may perform settlement or payment. According to one embodiment of the present disclosure, a cryptogram may be generated based on a token and issued key at the time of payment using the sub-electronic device 700. Further, when the generated cryptogram and a token are transferred through a POS device, a payable sate may be established after passing an authentication process. Through the procedure described above, an actual payment may be performed.

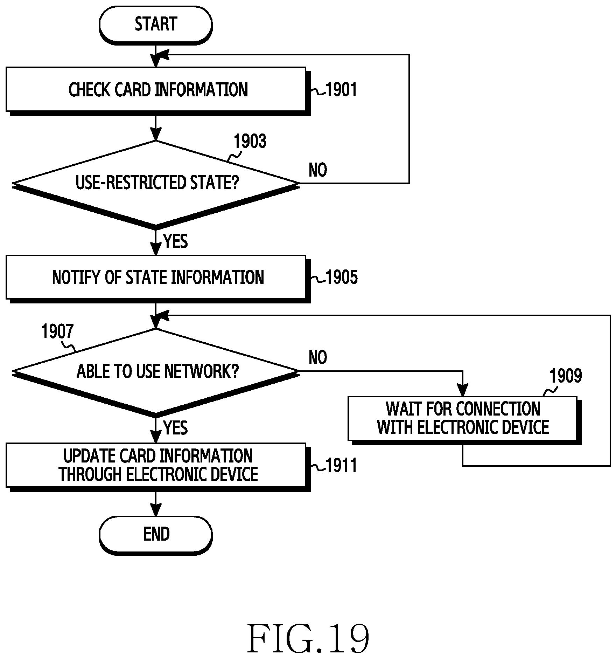

FIG. 19 is a flowchart illustrating a process in which a sub-electronic device according to various embodiments of the present disclosure updates an issued card.

FIG. 19 is a figure for describing replenishment for a card already issued to a sub-electronic device 700. The operations of FIG. 19 may be, for example, operations of updating a card (or token) already issued to the sub-electronic device 700 when a valid term or an allowed number of times of use for the card (or token) has expired.

In operation 1901, the sub-electronic device 700 may check card information. In various embodiments of the present disclosure, the sub-electronic device 700 may check the valid term or number of times of use of the card by checking the card information at a predetermined period or whenever the card is used.

In operation 1903, the sub-electronic device 700 may determine whether the card information indicates that the card is in a use-restricted state, on the basis of a result of the checking. According to one embodiment of the present disclosure, the sub-electronic device 700 may determine whether the valid term or number of times of use of the card corresponding to the card information has expired or is in a range of predicted expiration.

In operation 1903, when the sub-electronic device 700 determines that the card information does not indicate that the card is in the use-restricted state (NO in operation 1903), the sub-electronic device 700 returns to operation 1901 and performs the operations again therefrom.

In operation 1903, when the sub-electronic device 700 determines that the card information indicates that the card is in the use-restricted state or belongs to a pre-configured range (YES in operation 1903), the sub-electronic device 700 may notify a user of the state information of the card in operation 1905. In operation 1905, according to one embodiment of the present disclosure, the sub-electronic device 700 may notify the user that the valid term or number of times of use of the card has expired or is expected to expire. In various embodiments of the present disclosure, the notification of the state information may be selectively performed according to a pre-configured method. For example, when card update has been configured by the user to be automatically performed, the notification of the state information may be omitted or an automatic update of card information may be notified of.

In operation 1907, the sub-electronic device 700 may determine whether it can use a network. In various embodiments of the present disclosure, the sub-electronic device 700 may determine whether the sub-electronic device 700 has been connected (e.g., paired through a secure session) with the electronic device 600 capable of performing communication.

When it is determined in operation 1907 that the sub-electronic device 700 cannot use a network (NO in operation 1907), for example, when the sub-electronic device 700 is not connected with the electronic device 600, the sub-electronic device 700 waits for a connection with the electronic device 600 in operation 1909, and then proceeds to operation 1907 to perform the following operations.

When it is determined in operation 1907 that the sub-electronic device 700 can use a network (YES in operation 1907), for example, when the sub-electronic device 700 is connected with the electronic device 600, the sub-electronic device 700 may update card information through the electronic device 600 in operation 1911. In various embodiments of the present disclosure, the card information update operation may be performed in a process corresponding to that of the operations for issuance and authentication of a card between the sub-electronic device 700 and the electronic device 600.

According to various embodiments of the present disclosure, the sub-electronic device 700 is unable to perform direct communication with the server 500 through a network. Therefore, the sub-electronic device 700 may check the card information to preliminarily predict and update expiration thereof or, when the valid term has expired, the sub-electronic device 700 may perform the update when it comes into a state where it is connected to the electronic device 600 and thus can use a network. According to various embodiments of the present disclosure, the sub-electronic device 700 may be configured to perform an update slightly earlier than a period defined in the server 500 (e.g., TSM server 510), and may be configured to perform alarming and update in relation to the update even after the defined period.

According to various embodiments of the present disclosure, the operation method may include operations of: in response to a user input or a request from the electronic device, transferring information associated with the sub-electronic device to the electronic device; and entrusting the electronic device with operations of the sub-electronic device for the issuance of the card, wherein the information associated with the sub-electronic device may include a device identifier of the sub-electronic device and the public key of the sub-electronic device.

According to various embodiments of the present disclosure, the operation of storing the card information may include: receiving encrypted card information corresponding to the request for issuance of the card from the electronic device; decrypting the received card information using the secret key of the sub-electronic device; and storing the decrypted card information in a secure area of the memory, and the encrypted card information may include information encrypted by the public key of the sub-electronic device in the external electronic device.

According to various embodiments of the present disclosure, the operation method may include the operations of: when starting operations for authentication of the card for the sub-electronic device, requesting the electronic device to transmit OTP information in a method corresponding to a selected authentication method; receiving the OTP information in the method corresponding to the selected authentication method from the electronic device and outputting the OTP information; and transferring an OTP input based on the received OTP information to the electronic device.

According to various embodiments of the present disclosure, the operation method may further include the operations of: determining whether the card information indicates that the card is in a use-restricted state; when the card information indicates that the card is in a use-restricted state or belongs to a predetermined range, determining whether the sub-electronic device can use a network; and updating the card information through a connected electronic device in a state where the sub-electronic device can use a network.

According to various embodiments of the present disclosure, the operation method may further include the operations of: determining a use-allowed state on the basis of the payment information; transmitting the payment information to the external electronic device through the electronic device, on the basis of a result of the determination; receiving payment information updated by the external electronic device from the electronic device; and storing the updated payment information.

Embodiments of the present disclosure as described above support and enable issuance and authentication of an account card of the electronic device 600 to the sub-electronic device 700 (e.g., wearable device) connected through a secure session with the electronic device 600, thereby enabling a user to conveniently use a card for the sub-electronic device 700.

By a method and an apparatus for providing a card service using an electronic device according to various embodiments of the present disclosure, a sub-electronic device (e.g., wearable device) connected to an electronic device (e.g., smart phone) can use a card service (or payment service), using an NFC emulation mode.

Various embodiments can provide issuance and authentication of a card for a sub-electronic device (e.g., wearable device) operating in a companion mode with an electronic device. Various embodiments may support a sub-electronic device connected to an electronic device through a secure session to enable a card of an account of the electronic device to be issued to and authenticated for the sub-electronic device, thereby supporting a convenient card use by a user using the sub-electronic device.

According to various embodiments of the present disclosure, even when a sub-electronic device does not have a TSM logic for issuance of a card, an electronic device connected thereto through a secure session can perform, by proxy, operations related to the issuance of the card, to enable an account card of the electronic device to be issued to and authenticated for the sub-electronic device, thereby providing a convenient card use for a user.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (600) comprising:
a first communication interface (411, 413) configured to establish wireless communication with a first external electronic device (500), using a first communication protocol;
a second communication interface (415) configured to establish wireless communication with a second external electronic device (700), using a second communication protocol;
a memory (450); and
one or more processors (480) electrically connected with the memory, the first communication interface, and the second communication interface, the electronic device (600) being **characterized in that** the one or more processors are configured to:
perform (601), by the second communication interface (415), a secure pairing with the second external electronic device (700) by using a secure session;
receive (607, 1505) information associated with the second external electronic device from the second external electronic device (700), using the second communication interface, wherein the information includes a device identifier and a public key of the second external electronic device (700);
certify (1507) to the first external electronic device (500) using the device identifier and the public key of the second external electronic device (700) that the second external electronic device (700) is safely connected to the electronic device (600) with the secure session;
transmit (613, 1509) a request of issuing a card for the second external electronic device (700) and the received information to the first external electronic device (500), using the first communication interface;
receive (617, 1511) card information corresponding to the request of issuing the card from the first external electronic device (500) and transfer (619, 1513) the received card information to the second external electronic device (700), the card information being encrypted by the public key of the second external electronic device (700) in the first external electronic device (500);
request (811) and receive (817) authentication information relating to an authentication process for the second external electronic device (700), using the first communication interface;
using the authentication information, perform (823) authentication of the second external electronic device (700);
using the first communication interface, receive payment information to be used in the second external electronic device (700) from the first external electronic device (500); and
using the second communication interface, transmit the payment information to the second external electronic device (700).

2. The electronic device (600) of claim 1, wherein the one or more processors, when starting the operations of issuing the card for the second external electronic device (700), are further configured to:
request (605) the second external electronic device (700) to provide the information associated with the second external electronic device, required for issuance of the card for the second external electronic device (700).

3. The electronic device (600) of claim 2, wherein the one or more processors are configured to:
when starting the operations for authentication of the card for the second external electronic device (700),
request (811) the first external electronic device (500) to transmit one time password, OTP, information in a method corresponding to an authentication method selected by the second external electronic device (700), and
receive (817), from the first external electronic device (500), the OTP information for the second external electronic device (700) in the method corresponding to the selected authentication method.

4. The electronic device (600) of claim 1, wherein the one or more processors are configured to make the electronic device (600) operate as a network proxy of the second external electronic device (700) in the issuance and authentication of the card for the second external electronic device (700).

5. A system comprising a device (700) and an electronic device (600),
wherein the device (700) comprises:
a communication interface (415) configured to establish, using a communication protocol, a wireless communication with the electronic device (600);
a memory (450); and
one or more processors (480) electrically connected with the memory and the communication interface;
wherein the electronic device (600) comprises:
a first communication interface (411, 413) configured to establish wireless communication with an external electronic device (500), using a first communication protocol; and
a second communication interface (415) configured to establish wireless communication with the device (700), using the communication protocol,
wherein the system is **characterized in that** it is configured to:
perform (601), using the second communication interface (415) of the electronic device (600), a secure pairing between the electronic device (600) and the device (700) by using a secure session;
transmit (607), using the communication interface of the device (700), information associated with the device (700) to the electronic device (600), wherein the information includes a device identifier and a public key of the device (700);
certify (1507), by the electronic device (600), to the external electronic device (500) using the device identifier and the public key of the device (700) that the device (700) is safely connected to the electronic device (600) with the secure session;
transmit (613, 1509), using the first communication interface of the electronic device (600), a request of issuing a card for the device (700) and the information including the device identifier and the public key of the device (700) to the external electronic device (500);
receive (617, 1511), using the first communication interface of the electronic device (600), card information corresponding to the request of issuing the card from the external electronic device (500);
transfer (619, 1513), using the second communication interface of the electronic device (600), the received card information to the device (700), the card information being encrypted by the public key of the device (700); and
decrypt (621), by the device (700), the received encrypted card information by a private key corresponding to the public key of the device (700) and store the decrypted card information in the memory.

6. The system of claim 5, wherein the system is further configured to:
when starting operations of issuing the card for the device (700), in response to a user input or a request from the electronic device (600), assign, by the device (700), operations of the device (700) for issuing the card to the electronic device (600), and
store the decrypted card information in a secure area of the memory (450) of the device (700).

7. The system of claim 6, wherein the system is further configured to:
request (807), by the device (700), when starting operations for authentication of the card for the device (700), the electronic device (600) to transmit one time password, OTP, information in a method corresponding to a selected authentication method;
receive (819), at the device (700), the OTP information in the method corresponding to the selected authentication method from the electronic device (600) and output the OTP information; and
transfer (821), by the device (700), an OTP input based on the received OTP information to the electronic device (600).

8. An operation method of an electronic device (600), the operation method being **characterized in that** it comprises:
performing (601) a secure pairing with a second external electronic device (700) by using a secure session;
receiving (607, 1505) information associated with the second external electronic device (700) from the second external electronic device (700), using a second communication interface, wherein the information includes a device identifier and a public key of the second external electronic device (700);
certifying (1507) to the first external electronic device (500) using the device identifier and the public key of the second external electronic device (700) that the second external electronic device (700) is safely connected to the electronic device (600) with the secure session;
transmitting (613, 1509) a request of issuing a card for the second external electronic device (700) and the received information to a first external electronic device (500), using a first communication interface;
receiving (617, 1511) card information corresponding to the request of issuing the card from the first external electronic device (500) and transfer (619, 1513) the received card information to the second external electronic device (700), the card information being encrypted by the public key of the second external electronic device (700) in the first external electronic device (500);
requesting (811) and receiving (817) authentication information relating to an authentication process for the second external electronic device (700), using the first communication interface;
performing (823) authentication of the second external electronic device (700), using the authentication information;
receiving payment information to be used in the second external electronic device (700) from the first external electronic device (500), using the first communication interface; and
transmitting the payment information to the second external electronic device (700), using the second communication interface.

9. The operation method of claim 8, further comprising:
request (605) the second external electronic device (700) to provide the information associated with the second external electronic device, required for issuance of the card for the second external electronic device (700).

10. The operation method of claim 8, further comprising:
receiving, when starting operations for authentication of the card for the second external electronic device (700), an authentication method selected by the second external electronic device (700);
requesting (811) the first external electronic device (500) to transmit one time password, OTP, information in a method corresponding to the selected authentication method; and
receiving (817), from the first external electronic device (500), the OTP information received for the second external electronic device (700) in the method corresponding to the selected authentication method.

11. An operation method of a system comprising a device (700) and an electronic device (600), the operation method being **characterized in that** it comprises: :
establishing, using a communication protocol, a wireless communication between the device (700) and the electronic device (600), wherein the wireless communication is a secure pairing using a secure session;
establishing, using a first communication protocol, a wireless communication between the electronic device (600) and an external electronic device (500);
transmitting (607), at the device (700), information associated with the device (700) to the electronic device (600), wherein the information includes a device identifier and a public key of the device (700);
certify (1507), by the electronic device (600), to the external electronic device (500) using the device identifier and the public key of the device (700) that the device (700) is safely connected to the electronic device (600) with the secure session;
transmit (613, 1509), by the electronic device (600), a request of issuing a card for the device (700) and the information including the device identifier and the public key of the device (700) to the external electronic device (500);
receive (617, 1511), at the electronic device (600), card information corresponding to the request of issuing the card from the external electronic device (500);
transfer (619, 1513), by the electronic device (600), the received card information to the device (700), the card information being encrypted by the public key of the device (700);
decrypting (621), by the device (700), the received encrypted card information by a private key corresponding to the public key of the device (700) and storing the decrypted card information in a memory.

12. The operation method of claim 11, further comprising:
assigning, by the device (700), to the electronic device (600) with operations of the device (700) for the issuance of a card.

13. The operation method of claim 11, wherein storing of card information comprises:
storing (621) the decrypted card information in a secure area of the memory.

14. The operation method of claim 11, further comprising:
requesting (807), by the device (700), when starting operations for authentication of a card for the device (700), the electronic device (600) to transmit one time password, OTP, information in a method corresponding to a selected authentication method;
receiving (819), at the device (700), the OTP information in the method corresponding to the selected authentication method from the electronic device (600) and outputting the OTP information; and
transferring (821), by the device (700), an OTP input based on the received OTP information to the electronic device (600).

15. The operation method of claim 14, further comprising:
determining (1903) whether card information indicates that the card is in a use-restricted state;
determining, (1907) when the card information indicates that the card is in a use-restricted state or belongs to a predetermined range, whether the device (700) can use a network; and
updating (1911) the card information through a connected electronic device (600) in a state where the device (700) can use a network.

## Patentansprüche

1. Elektronische Vorrichtung (600), umfassend:
eine erste Kommunikationsschnittstelle (411, 413), die konfiguriert ist, um drahtlose Kommunikation mit einer ersten externen elektronischen Vorrichtung (500) unter Verwendung eines ersten Kommunikationsprotokolls herzustellen;
eine zweite Kommunikationsschnittstelle (415), die konfiguriert ist, um drahtlose Kommunikation mit einer zweiten externen elektronischen Vorrichtung (700) unter Verwendung eines zweiten Kommunikationsprotokolls herzustellen;
einen Speicher (450); und
einen oder mehrere Prozessoren (480), die elektrisch mit dem Speicher, der ersten Kommunikationsschnittstelle und der zweiten Kommunikationsschnittstelle verbunden sind, wobei die elektronische Vorrichtung (600) **dadurch gekennzeichnet ist, dass** der eine oder die mehreren Prozessoren für Folgendes konfiguriert sind:
Durchführen (601), durch die zweite Kommunikationsschnittstelle (415), eines sicheren Pairings mit der zweiten externen elektronischen Vorrichtung (700) unter Verwendung einer sicheren Sitzung;
Empfangen (607, 1505) von Informationen, die der zweiten externen elektronischen Vorrichtung zugeordnet sind, von der zweiten externen elektronischen Vorrichtung (700), unter Verwendung der zweiten Kommunikationsschnittstelle, wobei die Informationen eine Vorrichtungskennung und einen öffentlichen Schlüssel der zweiten externen elektronischen Vorrichtung (700) beinhalten;
Bestätigen (1507) der ersten externen elektronischen Vorrichtung (500) unter Verwendung der Vorrichtungskennung und des öffentlichen Schlüssels der zweiten externen elektronischen Vorrichtung (700), dass die zweite externe elektronische Vorrichtung (700) mit der sicheren Sitzung sicher mit der elektronischen Vorrichtung (600) verbunden ist;
Übertragen (613, 1509) einer Anforderung zum Ausgeben einer Karte für die zweite externe elektronische Vorrichtung (700) und die empfangenen Informationen an die erste externe elektronische Vorrichtung (500) unter Verwendung der ersten Kommunikationsschnittstelle;
Empfangen (617, 1511) von Karteninformationen, die der Anforderung zum Ausgeben der Karte von der ersten externen elektronischen Vorrichtung (500) entsprechen, und Übertragen (619, 1513) der empfangenen Karteninformationen an die zweite externe elektronische Vorrichtung (700), wobei die Karteninformationen mit dem öffentlichen Schlüssel der zweiten externen elektronischen Vorrichtung (700) in der ersten externen elektronischen Vorrichtung (500) verschlüsselt sind;
Anfordern (811) und Empfangen (817) von Authentifizierungsinformationen, die sich auf einen Authentifizierungsprozess für die zweite externe elektronische Vorrichtung (700) beziehen, unter Verwendung der ersten Kommunikationsschnittstelle;
unter Verwendung der Authentifizierungsinformationen, Durchführen (823) von Authentifizierung der zweiten externen elektronischen Vorrichtung (700);
unter Verwendung der ersten Kommunikationsschnittstelle, Empfangen von Zahlungsinformationen, die in der zweiten externen elektronischen Vorrichtung (700) verwendet werden sollen, von der ersten externen elektronischen Vorrichtung (500); und
unter Verwendung der zweiten Kommunikationsschnittstelle, Übertragen der Zahlungsinformationen an die zweite externe elektronische Vorrichtung (700).

2. Elektronische Vorrichtung (600) nach Anspruch 1, wobei der eine oder die mehreren Prozessoren beim Starten der Vorgänge zum Ausgeben der Karte für die zweite externe elektronische Vorrichtung (700) ferner für Folgendes konfiguriert sind:
Anfordern (605) an die zweite externe elektronische Vorrichtung (700), die Informationen bereitzustellen, die der zweiten externen elektronischen Vorrichtung zugeordnet sind, die zur Ausgabe der Karte für die zweite externe elektronische Vorrichtung (700) erforderlich sind.

3. Elektronische Vorrichtung (600) nach Anspruch 2, wobei der eine oder die mehreren Prozessoren für Folgendes konfiguriert sind:
beim Starten der Vorgänge zur Authentifizierung der Karte für die zweite externe elektronische Vorrichtung (700),
Anfordern (811) an die erste externe elektronische Vorrichtung (500), Einmalpasswortinformationen, OTP-Informationen, in einem Verfahren zu übertragen, das einem Authentifizierungsverfahren entspricht, das von der zweiten externen elektronischen Vorrichtung (700) ausgewählt ist, und
Empfangen (817), von der ersten externen elektronischen Vorrichtung (500), der OTP-Informationen für die zweite externe elektronische Vorrichtung (700) in dem Verfahren, das dem ausgewählten Authentifizierungsverfahren entspricht.

4. Elektronische Vorrichtung (600) nach Anspruch 1, wobei der eine oder die mehreren Prozessoren konfiguriert sind, um die elektronische Vorrichtung (600) als Netzwerk-Proxy der zweiten externen elektronischen Vorrichtung (700) bei der Ausgabe und Authentifizierung der Karte für die zweite externe elektronische Vorrichtung (700) arbeiten zu lassen.

5. System, umfassend eine Vorrichtung (700) und eine elektronische Vorrichtung (600), wobei die Vorrichtung (700) Folgendes umfasst:
eine Kommunikationsschnittstelle (415), die konfiguriert ist, um unter Verwendung eines Kommunikationsprotokolls eine drahtlose Kommunikation mit der elektronischen Vorrichtung (600) herzustellen;
einen Speicher (450); und
einen oder mehrere Prozessoren (480), die elektrisch mit dem Speicher und der Kommunikationsschnittstelle verbunden sind;
wobei die elektronische Vorrichtung (600) Folgendes umfasst:
eine erste Kommunikationsschnittstelle (411, 413), die konfiguriert ist, um drahtlose Kommunikation mit einer externen elektronischen Vorrichtung (500) unter Verwendung eines ersten Kommunikationsprotokolls herzustellen; und
eine zweite Kommunikationsschnittstelle (415), die konfiguriert ist, um drahtlose Kommunikation mit der Vorrichtung (700) unter Verwendung des Kommunikationsprotokolls herzustellen,
wobei das System **dadurch gekennzeichnet ist, dass** es für Folgendes konfiguriert ist:
Durchführen (601), unter Verwendung der zweiten Kommunikationsschnittstelle (415) der elektronischen Vorrichtung (600), eines sicheren Pairings zwischen der elektronischen Vorrichtung (600) und der Vorrichtung (700) unter Verwendung einer sicheren Sitzung;
Übertragen (607), unter Verwendung der Kommunikationsschnittstelle der Vorrichtung (700), von Informationen, die der Vorrichtung (700) zugeordnet sind, an die elektronische Vorrichtung (600), wobei die Informationen eine Vorrichtungskennung und einen öffentlichen Schlüssel der Vorrichtung (700) beinhalten;
Bestätigen (1507), durch die elektronische Vorrichtung (600), der externen elektronischen Vorrichtung (500) unter Verwendung der Vorrichtungskennung und des öffentlichen Schlüssels der Vorrichtung (700), dass die Vorrichtung (700) mit der sicheren Sitzung sicher mit der elektronischen Vorrichtung (600) verbunden ist;
Übertragen (613, 1509), unter Verwendung der ersten Kommunikationsschnittstelle der elektronischen Vorrichtung (600), einer Anforderung zum Ausgeben einer Karte für die Vorrichtung (700) und der Informationen, die die Vorrichtungskennung und den öffentlichen Schlüssel der Vorrichtung (700) beinhalten, an die externe elektronische Vorrichtung (500);
Empfangen (617, 1511), unter Verwendung der ersten Kommunikationsschnittstelle der elektronischen Vorrichtung (600), von Karteninformationen, die der Anforderung zum Ausgeben der Karte von der externen elektronischen Vorrichtung (500) entsprechen;
Übertragen (619, 1513), unter Verwendung der zweiten Kommunikationsschnittstelle der elektronischen Vorrichtung (600), der empfangenen Karteninformationen an die Vorrichtung (700), wobei die Karteninformationen durch den öffentlichen Schlüssel der Vorrichtung (700) verschlüsselt sind; und
Entschlüsseln (621), durch die Vorrichtung (700), der empfangenen verschlüsselten Karteninformationen durch einen privaten Schlüssel, der dem öffentlichen Schlüssel der Vorrichtung (700) entspricht, und Speichern der entschlüsselten Karteninformationen in dem Speicher.

6. System nach Anspruch 5, wobei das System ferner für Folgendes konfiguriert ist: beim Starten von Vorgängen zum Ausgeben der Karte für die Vorrichtung (700), als Reaktion auf eine Benutzereingabe oder eine Anforderung von der elektronischen Vorrichtung (600), Zuweisen, durch die Vorrichtung (700), von Vorgängen der Vorrichtung (700) zum Ausgeben der Karte an die elektronische Vorrichtung (600), und
Speichern der entschlüsselten Karteninformationen in einem sicheren Bereich des Speichers (450) der Vorrichtung (700).

7. System nach Anspruch 6, wobei das System ferner für Folgendes konfiguriert ist: Anfordern (807), durch die Vorrichtung (700), beim Starten von Vorgängen zur Authentifizierung der Karte für die Vorrichtung (700), der elektronischen Vorrichtung (600), Einmalpasswortinformationen, OTP-Informationen, in einem Verfahren zu übertragen, das einem ausgewählten Authentifizierungsverfahren entspricht;
Empfangen (819), an der Vorrichtung (700), der OTP-Informationen in dem Verfahren, das dem ausgewählten Authentifizierungsverfahren entspricht, von der elektronischen Vorrichtung (600) und Ausgeben der OTP-Informationen; und
Übertragen (821), durch die Vorrichtung (700), einer OTP-Eingabe basierend auf den empfangenen OTP-Informationen an die elektronische Vorrichtung (600).

8. Betriebsverfahren einer elektronischen Vorrichtung (600), wobei das Betriebsverfahren **dadurch gekennzeichnet ist, dass** es Folgendes umfasst:
Durchführen (601) eines sicheren Pairings mit einer zweiten externen elektronischen Vorrichtung (700) unter Verwendung einer sicheren Sitzung;
Empfangen (607, 1505) von Informationen, die der zweiten externen elektronischen Vorrichtung (700) zugeordnet sind, von der zweiten externen elektronischen Vorrichtung (700), unter Verwendung einer zweiten Kommunikationsschnittstelle, wobei die Informationen eine Vorrichtungskennung und einen öffentlichen Schlüssel der zweiten externen elektronischen Vorrichtung (700) beinhalten;
Bestätigen (1507) der ersten externen elektronischen Vorrichtung (500) unter Verwendung der Vorrichtungskennung und des öffentlichen Schlüssels der zweiten externen elektronischen Vorrichtung (700), dass die zweite externe elektronische Vorrichtung (700) mit der sicheren Sitzung sicher mit der elektronischen Vorrichtung (600) verbunden ist;
Übertragen (613, 1509) einer Anforderung zum Ausgeben einer Karte für die zweite externe elektronische Vorrichtung (700) und der empfangenen Informationen an eine erste externe elektronische Vorrichtung (500) unter Verwendung einer ersten Kommunikationsschnittstelle;
Empfangen (617, 1511) von Karteninformationen, die der Anforderung zum Ausgeben der Karte entsprechen, von der ersten externen elektronischen Vorrichtung (500), und Übertragen (619, 1513) der empfangenen Karteninformationen an die zweite externe elektronische Vorrichtung (700), wobei die Karteninformationen durch den öffentlichen Schlüssel der zweiten externen elektronischen Vorrichtung (700) in der ersten externen elektronischen Vorrichtung (500) verschlüsselt sind;
Anfordern (811) und Empfangen (817) von Authentifizierungsinformationen in Bezug auf einen Authentifizierungsprozess für die zweite externe elektronische Vorrichtung (700) unter Verwendung der ersten Kommunikationsschnittstelle;
Durchführen (823) von Authentifizierung der zweiten externen elektronischen Vorrichtung (700) unter Verwendung der Authentifizierungsinformationen;
Empfangen von Zahlungsinformationen, die in der zweiten externen elektronischen Vorrichtung (700) verwendet werden sollen, von der ersten externen elektronischen Vorrichtung (500) unter Verwendung der ersten Kommunikationsschnittstelle; und
Übertragen der Zahlungsinformationen an die zweite externe elektronische Vorrichtung (700) unter Verwendung der zweiten Kommunikationsschnittstelle.

9. Betriebsverfahren nach Anspruch 8, ferner umfassend: Anfordern (605) an die zweite externe elektronische Vorrichtung (700), die Informationen bereitzustellen, die der zweiten externen elektronischen Vorrichtung zugeordnet sind, die für die Ausgabe der Karte für die zweite externe elektronische Vorrichtung (700) erforderlich sind.

10. Verfahren nach Anspruch 8, ferner umfassend:
Empfangen, beim Starten von Vorgängen zur Authentifizierung der Karte für die zweite externe elektronische Vorrichtung (700), eines Authentifizierungsverfahrens, das von der zweiten externen elektronischen Vorrichtung (700) ausgewählt ist;
Anfordern (811) an die erste externe elektronische Vorrichtung (500), Einmalpasswortinformationen, OTP-Informationen, in einem Verfahren zu übertragen, das dem ausgewählten Authentifizierungsverfahren entspricht; und
Empfangen (817), von der ersten externen elektronischen Vorrichtung (500), der OTP-Informationen, die für die zweite externe elektronische Vorrichtung (700) empfangen werden, in dem Verfahren, das dem ausgewählten Authentifizierungsverfahren entspricht.

11. Betriebsverfahren eines Systems, das eine Vorrichtung (700) und eine elektronische Vorrichtung (600) umfasst, wobei das Betriebsverfahren **dadurch gekennzeichnet ist, dass** es Folgendes umfasst:
Herstellen, unter Verwendung eines Kommunikationsprotokolls, einer drahtlosen Kommunikation zwischen der Vorrichtung (700) und der elektronischen Vorrichtung (600), wobei die drahtlose Kommunikation ein sicheres Pairing unter Verwendung einer sicheren Sitzung ist;
Herstellen, unter Verwendung eines ersten Kommunikationsprotokolls, einer drahtlosen Kommunikation zwischen der elektronischen Vorrichtung (600) und einer externen elektronischen Vorrichtung (500);
Übertragen (607), an der Vorrichtung (700), von Informationen, die der Vorrichtung (700) zugeordnet sind, an die elektronische Vorrichtung (600), wobei die Informationen eine Vorrichtungskennung und einen öffentlichen Schlüssel der Vorrichtung (700) beinhalten;
Bestätigen (1507), durch die elektronische Vorrichtung (600), der externen elektronischen Vorrichtung (500) unter Verwendung der Vorrichtungskennung und des öffentlichen Schlüssels der Vorrichtung (700), dass die Vorrichtung (700) mit der sicheren Sitzung sicher mit der elektronischen Vorrichtung (600) verbunden ist;
Übertragen (613, 1509), durch die elektronische Vorrichtung (600), einer Anforderung zum Ausgeben einer Karte für die Vorrichtung (700) und der Informationen, die die Vorrichtungskennung und den öffentlichen Schlüssel der Vorrichtung (700) beinhalten, an die externe elektronische Vorrichtung (500);
Empfangen (617, 1511), an der elektronischen Vorrichtung (600), von Karteninformationen, die der Anforderung zum Ausgeben der Karte entsprechen, von der externen elektronischen Vorrichtung (500);
Übertragen (619, 1513), durch die elektronische Vorrichtung (600), der empfangenen Karteninformationen an die Vorrichtung (700), wobei die Karteninformationen durch den öffentlichen Schlüssel der Vorrichtung (700) verschlüsselt sind;
Entschlüsseln (621), durch die Vorrichtung (700), der empfangenen verschlüsselten Karteninformationen durch einen privaten Schlüssel, der dem öffentlichen Schlüssel der Vorrichtung (700) entspricht, und Speichern der entschlüsselten Karteninformationen in einem Speicher.

12. Betriebsverfahren nach Anspruch 11, ferner umfassend:
Zuweisen, durch die Vorrichtung (700), an die elektronische Vorrichtung (600), von Vorgängen der Vorrichtung (700) zur Ausgabe einer Karte.

13. Betriebsverfahren nach Anspruch 11, wobei das Speichern von Karteninformationen Folgendes umfasst:
Speichern (621) der entschlüsselten Karteninformationen in einem sicheren Bereich des Speichers.

14. Betriebsverfahren nach Anspruch 11, ferner umfassend:
Anfordern (807), durch die Vorrichtung (700), beim Starten von Vorgängen zur Authentifizierung einer Karte für die Vorrichtung (700), der elektronischen Vorrichtung (600), ein Einmalpasswortinformationen, OTP-Informationen, in einem Verfahren zu übertragen, das einem ausgewählten Authentifizierungsverfahren entspricht;
Empfangen (819), an der Vorrichtung (700), der OTP-Informationen in dem Verfahren, das dem ausgewählten Authentifizierungsverfahren entspricht, von der elektronischen Vorrichtung (600) und Ausgeben der OTP-Informationen; und
Übertragen (821), durch die Vorrichtung (700), einer OTP-Eingabe basierend auf den empfangenen OTP-Informationen an die elektronische Vorrichtung (600).

15. Betriebsverfahren nach Anspruch 14, ferner umfassend:
Bestimmen (1903), ob Karteninformationen angeben, dass sich die Karte in einem nutzungsbeschränkten Zustand befindet;
Bestimmen (1907), wenn die Karteninformationen angeben, dass sich die Karte in einem nutzungsbeschränkten Zustand befindet oder zu einem vorbestimmten Bereich gehört, ob die Vorrichtung (700) ein Netzwerk verwenden kann; und
Aktualisieren (1911) der Karteninformationen durch eine verbundene elektronische Vorrichtung (600) in einem Zustand, in dem die Vorrichtung (700) ein Netzwerk verwenden kann.

## Revendications

1. Dispositif électronique (600) comprenant :
une première interface de communication (411, 413) configurée pour établir une communication sans fil avec un premier dispositif électronique externe (500), en utilisant un premier protocole de communication ;
une deuxième interface de communication (415) configurée pour établir une communication sans fil avec un deuxième dispositif électronique externe (700), en utilisant un deuxième protocole de communication ;
une mémoire (450) ; et
un ou plusieurs processeurs (480) connectés électriquement à la mémoire, à la première interface de communication, et à la deuxième interface de communication, le dispositif électronique (600) étant **caractérisé en ce que**
l'un ou plusieurs processeurs configurés pour :
exécuter (601), par la deuxième interface de communication (415), un appariement sécurisé avec le deuxième dispositif électronique externe (700) en utilisant une session sécurisée ;
recevoir (607, 1505) des informations associées au deuxième dispositif électronique externe en provenance du deuxième dispositif électronique externe (700), en utilisant la deuxième interface de communication, dans lequel les informations comprennent un identifiant de dispositif et une clé publique du deuxième dispositif électronique externe (700) ;
certifier (1507) au premier dispositif électronique externe (500) en utilisant l'identifiant de dispositif et la clé publique du deuxième dispositif électronique externe (700) que le deuxième dispositif électronique externe (700) est connecté en toute sécurité au dispositif électronique (600) avec la session sécurisée ;
transmettre (613, 1509) une demande d'émission d'une carte pour le deuxième dispositif électronique externe (700) et les informations reçues au premier dispositif électronique externe (500), en utilisant la première interface de communication ;
recevoir (617, 1511) des informations de carte correspondant à la demande d'émission de la carte en provenance du premier dispositif électronique externe (500) et transférer (619, 1513) les informations de carte reçues au deuxième dispositif électronique externe (700), les informations de carte étant cryptées par la clé publique du deuxième dispositif électronique externe (700) dans le premier dispositif électronique externe (500) ;
demander (811) et recevoir (817) des informations d'authentification relatives à un processus d'authentification pour le deuxième dispositif électronique externe (700), en utilisant la première interface de communication ;
en utilisant les informations d'authentification, exécuter (823) l'authentification du deuxième dispositif électronique externe (700) ;
en utilisant la première interface de communication, recevoir des informations de paiement à utiliser dans le deuxième dispositif électronique externe (700) en provenance du premier dispositif électronique externe (500) ; et
en utilisant la deuxième interface de communication, transmettre les informations de paiement au deuxième dispositif électronique externe (700).

2. Dispositif électronique (600) selon la revendication 1, dans lequel l'un ou plusieurs processeurs, lors du démarrage des opérations d'émission de la carte pour le deuxième dispositif électronique externe (700), sont en outre configurés pour :
demander (605) au deuxième dispositif électronique externe (700) de fournir les informations associées au deuxième dispositif électronique externe, requises pour l'émission de la carte pour le deuxième dispositif électronique externe (700).

3. Dispositif électronique (600) selon la revendication 2, dans lequel l'un ou plusieurs processeurs sont configurés pour :
lors du démarrage des opérations d'authentification de la carte pour le deuxième dispositif électronique externe (700),
demander (811) au premier dispositif électronique externe (500) de transmettre des informations de mot de passe à usage unique, OTP, dans un procédé correspondant à un procédé d'authentification sélectionné par le deuxième dispositif électronique externe (700), et
recevoir (817), en provenance du premier dispositif électronique externe (500), les informations OTP pour le deuxième dispositif électronique externe (700) dans le procédé correspondant au procédé d'authentification sélectionné.

4. Dispositif électronique (600) selon la revendication 1, dans lequel l'un ou plusieurs processeurs sont configurés pour faire fonctionner le dispositif électronique (600) en tant que proxy de réseau du deuxième dispositif électronique externe (700) lors de l'émission et de l'authentification de la carte pour le deuxième dispositif électronique externe (700).

5. Système comprenant un dispositif (700) et un dispositif électronique (600), dans lequel le dispositif (700) comprend :
une interface de communication (415) configurée pour établir, à l'aide d'un protocole de communication, une communication sans fil avec le dispositif électronique (600) ; une mémoire (450) ; et
un ou plusieurs processeurs (480) connectés électriquement à la mémoire et à l'interface de communication ;
dans lequel le dispositif électronique (600) comprend :
une première interface de communication (411, 413) configurée pour établir une communication sans fil avec un dispositif électronique externe (500), en utilisant un premier protocole de communication ; et
une deuxième interface de communication (415) configurée pour établir une communication sans fil avec le dispositif (700), en utilisant le protocole de communication,
dans lequel le système est **caractérisé en ce qu'**il est configuré pour :
exécuter (601), en utilisant la deuxième interface de communication (415) du dispositif électronique (600), un appariement sécurisé entre le dispositif électronique (600) et le dispositif (700) en utilisant une session sécurisée ;
transmettre (607), en utilisant l'interface de communication du dispositif (700), des informations associées au dispositif (700) au dispositif électronique (600), dans lequel les informations comprennent un identifiant de dispositif et une clé publique du dispositif (700) ;
certifier (1507), par le dispositif électronique (600), au dispositif électronique externe (500) en utilisant l'identifiant de dispositif et la clé publique du dispositif (700) que le dispositif (700) est connecté en toute sécurité au dispositif électronique (600) avec la session sécurisée ;
transmettre (613, 1509), en utilisant la première interface de communication du dispositif électronique (600), une demande d'émission d'une carte pour le dispositif (700) et les informations comprenant l'identifiant de dispositif et la clé publique du dispositif (700) au dispositif électronique externe (500) ;
recevoir (617, 1511), en utilisant la première interface de communication du dispositif électronique (600), des informations de carte correspondant à la demande d'émission de la carte en provenance du dispositif électronique externe (500) ;
transférer (619, 1513), en utilisant la deuxième interface de communication du dispositif électronique (600), les informations de carte reçues au dispositif (700), les informations de carte étant cryptées par la clé publique du dispositif (700) ; et
décrypter (621), par le dispositif (700), les informations de carte cryptées reçues par une clé privée correspondant à la clé publique du dispositif (700) et stocker les informations de carte décryptées dans la mémoire.

6. Système selon la revendication 5, dans lequel le système est en outre configuré pour :
lors du démarrage des opérations d'émission de la carte pour le dispositif (700), en réponse à une entrée d'utilisateur ou à une demande du dispositif électronique (600), affecter, par le dispositif (700), des opérations du dispositif (700) pour émettre la carte au dispositif électronique (600), et stocker les informations de carte décryptées dans un zone sécurisée de la mémoire (450) du dispositif (700).

7. Système selon la revendication 6, dans lequel le système est en outre configuré pour :
demander (807), par le dispositif (700), lors du démarrage des opérations d'authentification de la carte pour le dispositif (700), au dispositif électronique (600) de transmettre des informations de mot de passe à usage unique, OTP, dans un procédé correspondant à un procédé d'authentification sélectionné ;
recevoir (819), au niveau du dispositif (700), les informations OTP dans le procédé correspondant au procédé d'authentification sélectionné en provenance du dispositif électronique (600) et émettre les informations OTP ; et
transférer (821), par le dispositif (700), une entrée OTP sur la base des informations OTP reçues au dispositif électronique (600).

8. Procédé de fonctionnement d'un dispositif électronique (600), le procédé de fonctionnement étant **caractérisé en ce qu'**il comprend :
l'exécution (601) d'un appariement sécurisé avec un deuxième dispositif électronique externe (700) en utilisant une session sécurisée ;
la réception (607, 1505) d'informations associées au deuxième dispositif électronique externe (700) en provenance du deuxième dispositif électronique externe (700), en utilisant une deuxième interface de communication, dans lequel les informations comprennent un identifiant de dispositif et une clé publique du deuxième dispositif électronique externe (700) ;
la certification (1507) au premier dispositif électronique externe (500) en utilisant l'identifiant de dispositif et la clé publique du deuxième dispositif électronique externe (700) que le deuxième dispositif électronique externe (700) est connecté en toute sécurité au dispositif électronique (600) avec la session sécurisée ;
la transmission (613, 1509) d'une demande d'émission d'une carte pour le deuxième dispositif électronique externe (700) et des informations reçues à un premier dispositif électronique externe (500), en utilisant une première interface de communication ;
la réception (617, 1511) d'informations de carte correspondant à la demande d'émission de la carte en provenance du premier dispositif électronique externe (500) et le transfert (619, 1513) des informations de carte reçues au deuxième dispositif électronique externe (700), les informations de carte étant cryptées par la clé publique du deuxième dispositif électronique externe (700) dans le premier dispositif électronique externe (500) ;
la demande (811) et la réception (817) d'informations d'authentification relatives à un processus d'authentification pour le deuxième dispositif électronique externe (700), en utilisant la première interface de communication ;
l'exécution (823) de l'authentification du deuxième dispositif électronique externe (700), en utilisant les informations d'authentification ;
la réception d'informations de paiement à utiliser dans le deuxième dispositif électronique externe (700) en provenance du premier dispositif électronique externe (500), en utilisant la première interface de communication ; et
la transmission des informations de paiement au deuxième dispositif électronique externe (700), en utilisant la deuxième interface de communication.

9. Procédé de fonctionnement selon la revendication 8, comprenant en outre :
la demande (605) au deuxième dispositif électronique externe (700) de fournir les informations associées au deuxième dispositif électronique externe, requises pour l'émission de la carte pour le deuxième dispositif électronique externe (700).

10. Procédé de fonctionnement selon la revendication 8, comprenant en outre :
la réception, lors du démarrage des opérations d'authentification de la carte pour le deuxième dispositif électronique externe (700), d'un procédé d'authentification sélectionné par le deuxième dispositif électronique externe (700) ;
la demande (811) au premier dispositif électronique externe (500) de transmettre des informations de mot de passe à usage unique, OTP, dans un procédé correspondant au procédé d'authentification sélectionné ; et
la réception (817), en provenance du premier dispositif électronique externe (500), des informations OTP reçues pour le deuxième dispositif électronique externe (700) dans le procédé correspondant au procédé d'authentification sélectionné.

11. Procédé de fonctionnement d'un système comprenant un dispositif (700) et un dispositif électronique (600), le procédé de fonctionnement étant **caractérisé en ce qu'**il comprend :
l'établissement, en utilisant un protocole de communication, d'une communication sans fil entre le dispositif (700) et le dispositif électronique (600), dans lequel la communication sans fil est un appariement sécurisé en utilisant une session sécurisée ;
l'établissement, en utilisant un premier protocole de communication, d'une communication sans fil entre le dispositif électronique (600) et un dispositif électronique externe (500) ;
la transmission (607), au niveau du dispositif (700), d'informations associées au dispositif (700) au dispositif électronique (600), dans lequel les informations comprennent un identifiant de dispositif et une clé publique du dispositif (700) ;
la certification (1507), par le dispositif électronique (600), au dispositif électronique externe (500) en utilisant l'identifiant de dispositif et la clé publique du dispositif (700) que le dispositif (700) est connecté en toute sécurité au dispositif électronique (600) avec la session sécurisée ;
la transmission (613, 1509), par le dispositif électronique (600), d'une demande d'émission d'une carte pour le dispositif (700) et des informations comprenant l'identifiant de dispositif et la clé publique du dispositif (700) au dispositif électronique externe (500) ;
la réception (617, 1511), au niveau du dispositif électronique (600), d'informations de carte correspondant à la demande d'émission de la carte en provenance du dispositif électronique externe (500) ;
le transfert (619, 1513), par le dispositif électronique (600), des informations de carte reçues au dispositif (700), les informations de carte étant cryptées par la clé publique du dispositif (700) ;
le décryptage (621), par le dispositif (700), des informations de carte cryptées reçues par une clé privée correspondant à la clé publique du dispositif (700) et le stockage des informations de carte décryptées dans une mémoire.

12. Procédé selon la revendication 11, comprenant en outre :
l'affectation, par le dispositif (700), au dispositif électronique (600) des opérations du dispositif (700) pour l'émission d'une carte.

13. Procédé d'exploitation selon la revendication 11, dans lequel le stockage d'informations de carte comprend :
le stockage (621) des informations de carte décryptées dans une zone sécurisée de la mémoire.

14. Procédé selon la revendication 11, comprenant en outre :
la demande (807), par le dispositif (700), lors du démarrage d'opérations d'authentification d'une carte pour le dispositif (700), au dispositif électronique (600) de transmettre des informations de mot de passe à usage unique, OTP, dans un procédé correspondant à un procédé d'authentification sélectionné ;
la réception (819), au niveau du dispositif (700), des informations OTP dans le procédé correspondant au procédé d'authentification sélectionné en provenance du dispositif électronique (600) et l'émission des informations OTP ; et
le transfert (821), par le dispositif (700), d'une entrée OTP sur la base des informations OTP reçues au dispositif électronique (600).

15. Procédé selon la revendication 14, comprenant en outre :
la détermination (1903) si les informations de carte indiquent que la carte est dans un état d'utilisation restreinte ;
la détermination (1907) lorsque les informations de carte indiquent que la carte est dans un état d'utilisation restreinte ou appartient à une plage prédéterminée, si le dispositif (700) peut utiliser un réseau ; et
la mise à jour (1911) des informations de carte via un dispositif électronique connecté (600) dans un état dans lequel le dispositif (700) peut utiliser un réseau.
